# FASCICULE DE BREVET EUROPEEN

(11) **EP 3 900 533 B1**
(45) Date de publication et mention de la délivrance du brevet: **01.05.2024**
(21) Numéro de dépôt: 21168599.5
(22) Date de dépôt: 15.04.2021
(51) Int. Cl.: A01M 7/00, A01B 59/00, A01B 59/06

(54) **PULVERISATEUR AGRICOLE PORTE PAR UN ENGIN AGRICOLE AU MOYEN D'UN SYSTEME D'ATTELAGE**
FELDSPRITZE, DIE VON EINER LANDWIRTSCHAFTLICHEN MASCHINE MITHILFE EINES KUPPLUNGSSYSTEMS GETRAGEN WIRD
AGRICULTURAL SPRAY TOWED BY A FARM VEHICLE BY MEANS OF A COUPLING SYSTEM

(30) Priorité: 20.04.2020 FR 2003936
(43) Date de publication de la demande: 27.10.2021
(73) Titulaire: Exel Industries, 51200 Epernay (FR)
(72) Inventeur: CARRA, Yves, 75009 Paris (FR); CHARCOSSET, Philippe, 75009 Paris (FR)
(74) Mandataire: Argyma

(56) Documents cités:
- EP-A1- 2 260 687
- EP-A1- 2 443 916
- EP-A1- 3 150 036
- EP-A1- 3 357 314
- DE-A1- 10 011 401
- GB-A- 780 941
- US-A- 3 214 191

## Description

### DOMAINE TECHNIQUE

L'invention concerne un pulvérisateur agricole destiné à être porté par un engin agricole au moyen d'un système d'attelage.

### ÉTAT DE LA TECHNIQUE ANTÉRIEURE

Il est connu d'équiper des engins agricoles, tels que des tracteurs, d'un pulvérisateur agricole comprenant un châssis supportant notamment une cuve destinée à contenir du liquide de traitement, tel que du produit phytosanitaire ou de l'engrais liquide, ainsi qu'une rampe de pulvérisation équipée de buses qui sont alimentées en liquide de traitement depuis la cuve et qui sont prévues pour pulvériser ce liquide de traitement dans un champ de végétaux à traiter.

Ce pulvérisateur agricole est par exemple porté à l'arrière de l'engin agricole au moyen d'un système de relevage à trois points.

Les documents EP3150036A1 , EP2260687A1, EP3357314A1 et GB780941A décrivent des exemples de systèmes d'attelage pour" pulvérisateur agricole. D'autre systèmes d'attelage connus sont décrits dans les documents DE10011401A1, US3214191Aet EP2443916A1

Deux des trois points du système de relevage de l'engin agricole sont situés en partie basse à l'arrière de l'engin agricole. Ces deux points du système de relevage sont prévus pour venir en prise avec l'avant du châssis du pulvérisateur agricole posé sur le sol, et pour lever le châssis du pulvérisateur agricole, le pulvérisateur agricole se trouvant alors porté par l'engin agricole.

Le troisième point du système de relevage de l'engin agricole est quant à lui situé au-dessus des deux autres points du système de relevage et est prévu pour coopérer avec un système d'attelage monté à l'avant du châssis du pulvérisateur agricole, de manière à empêcher le basculement du pulvérisateur agricole vers l'arrière, lorsqu'il est porté par l'engin agricole.

Ce système d'attelage comprend notamment un axe d'attelage horizontal sur lequel le troisième point du système de relevage de l'engin agricole vient s'engager, lorsque le châssis du pulvérisateur agricole est posé sur le sol.

De manière classique, le troisième point du système de relevage est monté manuellement sur l'axe d'attelage du pulvérisateur agricole. Dans le même temps, d'autres connexions, telles que des connexions hydrauliques ou électriques, peuvent être établies manuellement entre l'engin agricole et le pulvérisateur agricole. Une prise de force de l'engin agricole peut encore être couplée mécaniquement, notamment via un cardan de transmission, à une pompe de pulvérisation qui est montée sur le châssis du pulvérisateur agricole et qui assure l'alimentation des buses en liquide de traitement depuis la cuve. L'engagement du troisième point du système de relevage avec l'axe d'attelage du pulvérisateur agricole nécessite ainsi d'approcher suffisamment l'arrière de l'engin agricole de l'avant du châssis du pulvérisateur agricole.

Toutefois, cet engagement étant manuel, il est préférable que l'arrière de l'engin agricole et l'avant du châssis du pulvérisateur agricole ne soient pas trop rapprochés l'un de l'autre afin de permettre une manipulation plus facile du troisième point du système de relevage et de l'axe d'attelage. Il en est de même des connexions hydrauliques et électriques à établir entre l'engin agricole et le pulvérisateur agricole, ainsi que du couplage mécanique de la prise de force de l'engin agricole et de la pompe hydraulique.

Aussi, afin d'autoriser une distance maximale plus grande entre l'arrière de l'engin agricole et l'avant du châssis du pulvérisateur agricole, il a été proposé des systèmes d'attelage comprenant une chape d'attelage qui porte l'axe d'attelage et qui est montée pivotante sur le châssis autour d'un axe de pivotement parallèle à l'axe d'attelage, entre une position écartée et une position rapprochée dans laquelle l'axe d'attelage est plus proche du châssis qu'en position écartée, ainsi qu'un dispositif de verrouillage prévu pour verrouiller la chape d'attelage en position rapprochée.

Des améliorations peuvent cependant encore être apportées à ces systèmes d'attelage de pulvérisateur agricole pour augmenter la distance maximale autorisée entre l'arrière de l'engin agricole et l'avant du châssis du pulvérisateur agricole.

### EXPOSÉ DE L'INVENTION

A cet effet, la présente invention a pour objet un pulvérisateur agricole tel que décrit à la revendication 1.

Selon des variantes de réalisation qui peuvent être prises ensemble ou séparément :
- le dispositif de verrouillage comprend :
   * un premierverrou monté pivotant sur le châssis autour d'un deuxième axe de pivotement sensiblement parallèle à l'axe d'attelage,
      l'axe d'attelage étant conçu pour coopérer avec le premier verrou et pour entraîner le premier verrou en pivotement, entre une position de déverrouillage dans laquelle la chape d'attelage est libre de pivoter vers la position rapprochée et vers la position écartée et une position de verrouillage dans laquelle le pivotement de la chape d'attelage dans le premier sens de pivotement est verrouillé, lorsque la chape d'attelage pivote entre la position écartée et la position rapprochée,
   * un deuxième verrou monté mobile sur le châssis, entre une position de repos et une position contrainte dans laquelle un premier organe de rappel élastique rappelle le deuxième verrou en déplacement vers la position de repos ;
- le premier verrou est conçu pour entraîner le deuxième verrou en déplacement depuis la position de repos vers la position contrainte, lorsque le premier verrou pivote depuis la position de déverrouillage vers la position de verrouillage, et pour relâcher le deuxième verrou, lorsque le premier verrou atteint la position de verrouillage ;
- le deuxième verrou est conçu pour venir en butée contre le premier verrou, lorsque le premier verrou atteint la position de verrouillage et que le deuxième verrou se déplace depuis la position contrainte vers la position de repos sous l'effet du premier organe de rappel élastique, de sorte à verrouiller automatiquement le pivotement du premier verrou, dans un sens de pivotement allant de la position de verrouillage vers la position de déverrouillage, lorsque la chape d'attelage atteint la position rapprochée ;
- le système d'attelage comprend un dispositif de déblocage conçu pour débloquer manuellement le pivotement de la chape d'attelage par rapport au châssis, dans le premier sens de pivotement, lorsque la chape d'attelage occupe la position rapprochée ;
- le dispositif de déblocage comprend un organe de déblocage monté mobile sur le châssis, entre une position de blocage et une position de déblocage, l'organe de déblocage étant conçu pour entraîner le deuxième verrou en déplacement, depuis la position de repos vers la position contrainte, lorsque l'organe de déblocage se déplace depuis la position de blocage vers la position de déblocage ;
- le deuxième verrou est conçu pour maintenir le premier verrou en position de verrouillage, lorsque le deuxième verrou se déplace depuis la position de repos vers la position contrainte sous l'effet du déplacement de l'organe de déblocage depuis la position de blocage vers la position de déblocage, et pour relâcher le premier verrou, lorsque le deuxième verrou atteint la position contrainte ;
- le dispositif de déblocage comprend un deuxième organe de rappel élastique conçu pour rappeler élastiquement l'organe de déblocage en déplacement vers la position de blocage ;
- le deuxième verrou est conçu pour entraîner l'organe de déblocage en déplacement depuis la position de blocage vers la position de déblocage, lorsque le premier verrou pivote depuis la position de déverrouillage vers la position de verrouillage et entraîne le deuxième verrou en déplacement depuis la position de repos vers la position contrainte ;
- l'organe de déblocage est conçu pour entraîner le deuxième verrou en déplacement depuis la position contrainte vers la position de repos, lorsque le premier verrou atteint la position de verrouillage et relâche le deuxième verrou et que l'organe de déblocage se déplace depuis la position de déblocage vers la position de blocage sous l'effet du deuxième organe de rappel élastique ;
- le système d'attelage comprend un troisième organe de rappel élastique conçu pour rappeler élastiquement le premier verrou en pivotement dans le sens de pivotement allant de la position de verrouillage à la position de déverrouillage ;
- le système d'attelage comprend un dispositif de sécurité conçu pour automatiquement empêcher le dispositif de déblocage de débloquer le pivotement de la chape d'attelage, dans le premier sens de pivotement allant de la position rapprochée à la position écartée, lorsque le châssis du pulvérisateur agricole occupe la position relevée ;
- le dispositif de sécurité comprend un organe de sécurité monté pivotant sur la chape d'attelage autour de l'axe d'attelage, l'organe de sécurité étant conçu pour pivoter entre une positon de sécurité active dans laquelle l'organe de sécurité bloque le déplacement de l'organe de déblocage depuis la position de blocage vers la position de déblocage et une position de sécurité inactive dans laquelle l'organe de sécurité relâche le déplacement de l'organe de déblocage depuis la position de blocage vers la position de déblocage, lorsque la chape d'attelage occupe la position rapprochée ;
- le point de relevage principal est ménagé à l'extrémité libre d'un bras de relevage principal monté pivotant sur une structure de l'engin agricole autour d'un axe de relevage principal, sensiblement parallèle à l'axe d'attelage lorsque le point de relevage principal est monté sur l'axe d'attelage ;
- l'axe d'attelage est destiné à entraîner le bras de relevage principal en pivotement autour de l'axe de relevage principal, entre une première position angulaire et une deuxième position angulaire dans laquelle le point de relevage principal est situé plus haut que dans la première position angulaire, lorsque le pulvérisateur agricole est attelé à l'engin agricole et que le système de relevage lève et baisse le châssis entre les positions abaissée et relevée ;
- le bras de relevage principal est destiné à entraîner en pivotement l'organe de sécurité depuis la position de sécurité inactive vers la position de sécurité active, lorsque le pulvérisateur agricole est attelé à l'engin agricole et que le bras de relevage principal pivote depuis la première position angulaire vers la deuxième position angulaire ;
- l'organe de sécurité comprend un axe de sécurité, sensiblement parallèle à l'axe d'attelage, par l'intermédiaire duquel le bras de relevage principal est destiné à entraîner en pivotement l'organe de sécurité depuis la position de sécurité inactive vers la position de sécurité active, lorsque le pulvérisateur agricole est attelé à l'engin agricole et que le bras de relevage pivote depuis la première position angulaire vers la deuxième position angulaire ;
- l'axe de sécurité est situé en dessous du bras de relevage principal, lorsque le pulvérisateur agricole est attelé à l'engin agricole et que le bras de relevage occupe la première position angulaire ;
- un quatrième organe de rappel élastique du dispositif de sécurité est conçu pour rappeler élastiquement l'organe de sécurité en pivotement vers la position de sécurité inactive ;
- le dispositif de sécurité est aussi conçu pour automatiquement empêcher le dispositif de déblocage de débloquer le pivotement de la chape d'attelage, dans le premier sens de pivotement allant de la position rapprochée à la position écartée, lorsque le pulvérisateur agricole est attelé à l'engin agricole et que le système de relevage lève et abaisse le châssis entre les positions abaissée et relevée ;
- la chape d'attelage comprend une première partie portant l'axe d'attelage et une deuxième partie par l'intermédiaire de laquelle la chape d'attelage est montée pivotante sur le châssis, la première partie étant montée pivotante sur la deuxième partie autour d'un cinquième axe de pivotement, sensiblement perpendiculaire à l'axe d'attelage et au premier axe de pivotement, entre une première position angulaire extrême et une deuxième position angulaire extrême, en passant par une position angulaire médiane dans laquelle l'axe d'attelage est parallèle au premier axe de pivotement ou au moins compris dans un même plan ;
- la chape d'attelage comprend deux butées respectivement conçues pour bloquer le pivotement de la première partie dans un sens de pivotement allant de la deuxième position angulaire extrême à la première position angulaire extrême, lorsque la première partie occupe la première position angulaire extrême, et pour bloquer le pivotement de la première partie dans un sens de pivotement allant de la première position angulaire extrême à la deuxième position angulaire extrême, lorsque la première partie occupe la deuxième position angulaire extrême.

Un autre aspect non revendiqué concerne un système d'attelage pour pulvérisateur agricole tel que précédemment décrit, comprenant un support fixe destiné à être monté sur le châssis du pulvérisateur agricole et par l'intermédiaire duquel le dispositif de verrouillage et/ou le dispositif de déblocage et/ou le troisième organe de rappel élastique sont montés sur le châssis.

Un autre aspect non revendiqué concerne un engin agricole et un pulvérisateur agricole tel que précédemment décrit, l'engin agricole comprenant un système de relevage conçu pour lever et à baisser le châssis par rapport à l'engin agricole, entre une position abaissée dans laquelle le châssis est posé sur un sol globalement horizontal et une position relevée dans laquelle le châssis est porté par l'engin agricole, lorsque le pulvérisateur agricole est attelé à l'engin agricole, le système de relevage comprenant en outre un point de relevage principal conçu pour être monté de manière réversible sur l'axe d'attelage, et pour pivoter par rapport à la chape d'attelage autour de l'axe d'attelage et entraîner en pivotement la chape d'attelage entre la position écartée et la position rapprochée, lorsque le point de relevage principal est monté sur l'axe d'attelage.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
[Fig.1] est une vue de côté d'un pulvérisateur agricole selon un mode de réalisation de l'invention, le pulvérisateur agricole étant posé sur un sol en position abaissée et une chape d'attelage étant en position écartée ;
[Fig.2] est une vue de coté du pulvérisateur agricole illustré à la figure 1 et d'un engin agricole, la chape d'attelage pivotant depuis la position écartée vers une position rapprochée sous l'effet d'un point de relevage principal de l'engin agricole ;
[Fig.3] est une vue en coupe suivant un plan longitudinal et vertical du pulvérisateur agricole illustré à la figure 1 et du point de relevage principal, la chape d'attelage pivotant depuis la position écartée vers la position rapprochée sous l'effet du point de relevage principal ;
[Fig.4] est une vue en coupe suivant un plan longitudinal et vertical du pulvérisateur agricole illustré à la figure 1 et du point de relevage principal, la chape d'attelage pivotant depuis la position écartée vers la position rapprochée sous l'effet du point de relevage principal ;
[Fig.5] est une vue en coupe suivant un plan longitudinal et vertical du pulvérisateur agricole illustré à la figure 1 et du point de relevage principal, la chape d'attelage atteignant la position rapprochée sous l'effet du point de relevage principal ;
[Fig.6] est une vue en coupe suivant un plan longitudinal et vertical du pulvérisateur agricole illustré à la figure 1 et du point de relevage principal, la chape d'attelage occupant la position rapprochée, un dispositif de verrouillage verrouillant le pivotement de la chape d'attelage et un bras de relevage principal portant le point de relevage principal occupant une première position angulaire ;
[Fig.7] est une vue en coupe suivant un plan longitudinal et vertical du pulvérisateur agricole illustré à la figure 1 et du point de relevage principal, la chape d'attelage occupant la position rapprochée, le dispositif de verrouillage verrouillant le pivotement de la chape d'attelage et le bras de relevage principal occupant une deuxième position angulaire ;
[Fig.8] est une vue en coupe suivant un plan longitudinal et vertical du pulvérisateur agricole illustré à la figure 1 et du point de relevage principal, la chape d'attelage occupant la position rapprochée, le bras de relevage principal occupant la première position angulaire et un dispositif de déblocage se déplaçant pour débloquer le pivotement de la chape d'attelage ;
[Fig.9] est une vue en coupe suivant un plan longitudinal et vertical du pulvérisateur agricole illustré à la figure 1 et du point de relevage principal, la chape d'attelage occupant la position rapprochée, le bras de relevage principal occupant la première position angulaire et le dispositif de déblocage débloquant le pivotement de la chape d'attelage ;
[Fig.10] est une vue en coupe suivant un plan longitudinal et vertical du pulvérisateur agricole illustré à la figure 1 et du point de relevage principal, la chape d'attelage pivotant depuis la position rapprochée vers la position écartée sous l'effet du point de relevage principal ;
[Fig.11] est une vue en perspective du pulvérisateur agricole illustré à la figure 1, la chape d'attelage occupant la position rapprochée, le dispositif de verrouillage verrouillant le pivotement de la chape d'attelage et le bras de relevage principal occupant la première position angulaire ;
[Fig.12] est une vue de détail de la chape d'attelage du pulvérisateur agricole illustré à la figure 1.

### DESCRIPTION DETAILLEE

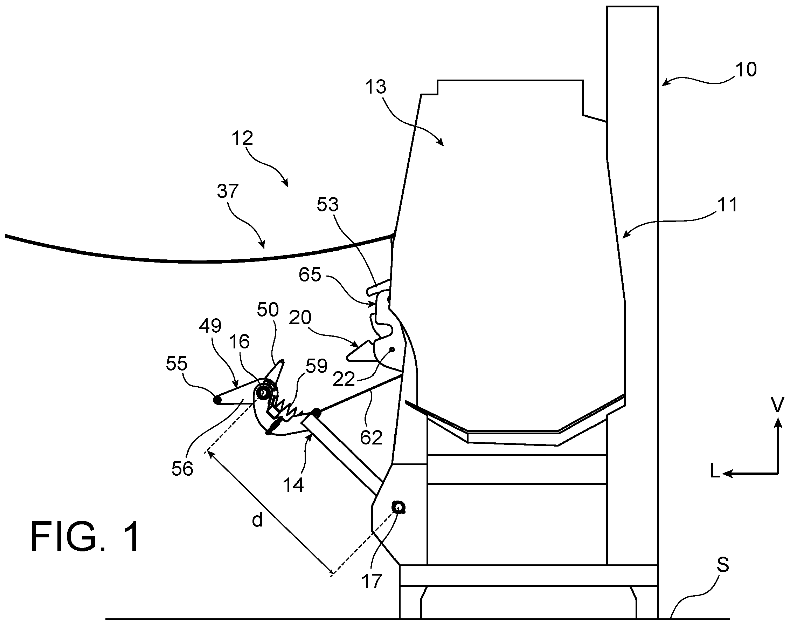

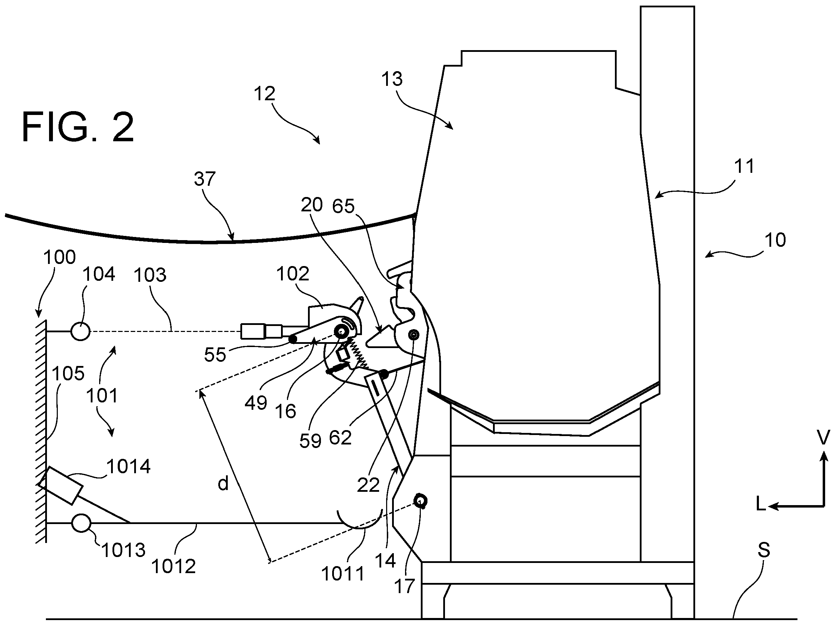

A titre préliminaire, il est adopté à titre non limitatif un repère orthogonal comprenant une direction longitudinale L vers l'avant, une direction transversale T vers la gauche et une direction verticale V vers haut. Les directions longitudinale L et transversale T sont horizontales, globalement parallèle à un sol S (figures 1 et 2).

Les figures 1 à 11 montrent un pulvérisateur agricole 10 selon un mode de réalisation de l'invention. Le pulvérisateur agricole 10 est destiné à être porté par un engin agricole 100, tel qu'un tracteur.

Le pulvérisateur agricole 10 comprend un châssis 11 fixe ainsi qu'un système d'attelage 12 monté sur le châssis 11, notamment à l'avant du châssis 11.

Le châssis 11 supporte par exemple une cuve 13 destinée à contenir du liquide de traitement (figures 1 et 2), notamment du produit phytosanitaire ou encore de l'engrais liquide, ainsi qu'une rampe de pulvérisation (non représentée) équipée de buses qui sont alimentées en liquide de traitement depuis la cuve 13 par l'intermédiaire d'un circuit (non représenté) de liquide de traitement reliant la cuve 13 aux buses et qui sont conçues pour le pulvériser dans un champ de végétaux à traiter. Le châssis 11 supporte par exemple aussi une pompe de pulvérisation (non représentée) conçue pour aspirer le liquide de traitement dans la cuve et pour le refouler vers les buses de manière à les alimenter en liquide de traitement.

Le système d'attelage 12 est destiné à atteler le châssis 11 du pulvérisateur agricole 10 à l'engin agricole 100 et à le dételer de l'engin agricole 100.

Pour cela, le système d'attelage 12 comprend une chape d'attelage 14, ainsi qu'un dispositif de verrouillage 20, 21, 23.

La chape d'attelage 14 comprend un axe d'attelage 16 globalement horizontal, notamment orienté globalement transversalement.

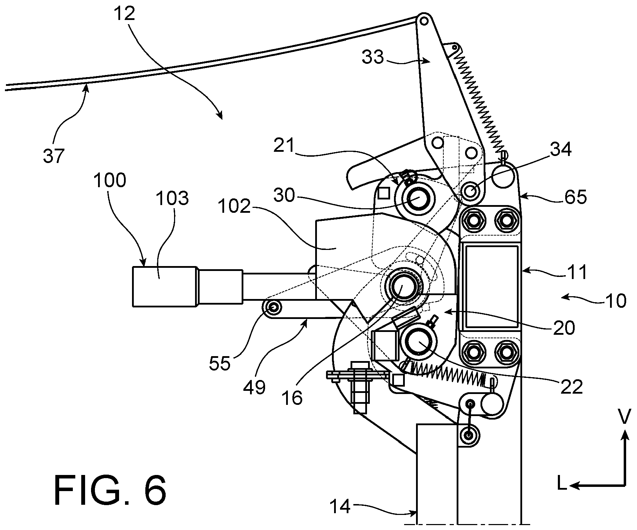

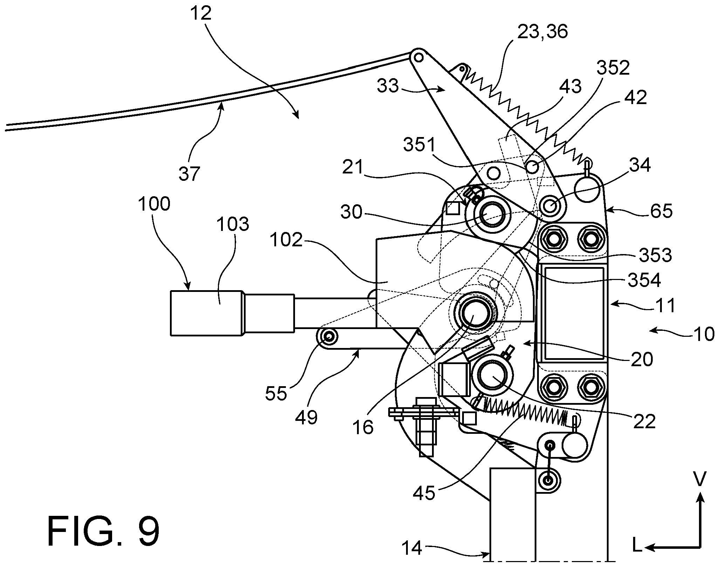

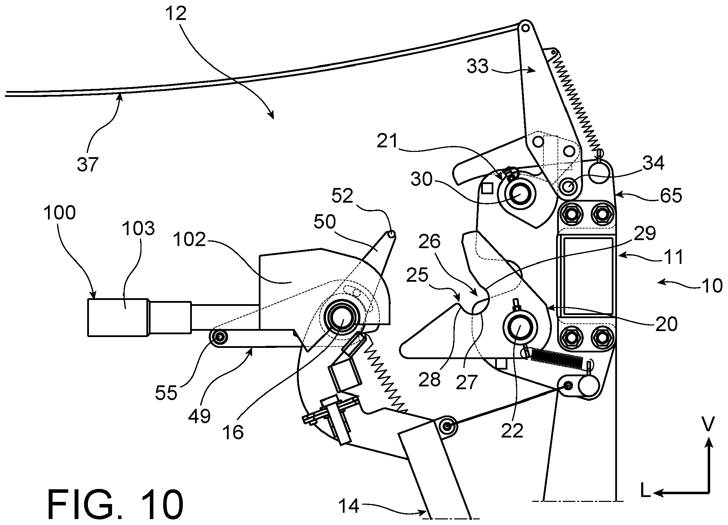

La chape d'attelage 14 est en outre montée pivotante sur le châssis 11, autour d'un premier axe de pivotement 17 sensiblement parallèle à l'axe d'attelage 16, entre une position écartée (figure 1) et une position rapprochée (figures 6 à 9) dans laquelle l'axe d'attelage 16 est plus proche du châssis 11 qu'en position écartée. Le premier axe de pivotement 17 est fixe par rapport au châssis 11. La chape d'attelage 14 pivote depuis la position écartée vers la position rapprochée, notamment de l'avant vers l'arrière. Les figures 1 à 6 montrent le pivotement de la chape d'attelage 14 depuis la position écartée vers la position rapprochée, tandis que les figures 9 et 10 montrent le pivotement de la chape d'attelage 14 depuis la position rapprochée vers la position écartée.

Une distance d entre l'axe d'attelage 16 et le premier axe de pivotement 17 est fixe ou encore constante (figures 1 et 2).

Le dispositif de verrouillage 20, 21, 23 est conçu pour verrouiller automatiquement le pivotement de la chape d'attelage 14 par rapport au châssis 11, dans un premier sens de pivotement allant de la position rapprochée à la position écartée, lorsque la chape d'attelage 14 atteint la position rapprochée (figure 6). Le dispositif de verrouillage 20, 21, 23 empêche ainsi le pivotement de la chape d'attelage 14 vers la position écartée, lorsqu'elle occupe sa position rapprochée.

L'engin agricole 100 comprend un système de relevage 101, qui peut être à trois points. Le système de relevage 101 est monté sur l'engin agricole 100, notamment à l'arrière de l'engin agricole 100.

Le système de relevage 101 est destiné à lever et à baisser le châssis 11 du pulvérisateur agricole 10 par rapport à l'engin agricole 100, entre une position abaissée dans laquelle le châssis 11 est posé sur le sol S et une position relevée dans laquelle le châssis 11 est porté par l'engin agricole 100, lorsque le pulvérisateur agricole 10 est attelé à l'engin agricole 100 au moyen du système d'attelage 12.

Pour cela, le système de relevage 101 comprend par exemple deux points de relevage 1011, dits secondaires, destinés à venir en prise avec et à relâcher le châssis 11 du pulvérisateur agricole 10. Les points de relevage secondaires 1011 sont en outre destinés à lever le châssis 11 par rapport à l'engin agricole 100, depuis la position abaissée vers la position relevée, et à baisser le châssis 11 depuis la position relevée vers la position abaissée, lorsqu'elle est en prise avec le châssis 11.

Les points de relevage secondaires 1011 sont par exemple chacun destinés à être montés de manière réversible sur un axe d'agrippement 171 du châssis 11 du pulvérisateur agricole 10, sensiblement parallèle avec l'axe d'attelage 16, les points de relevage secondaires 1011 pouvant ainsi être montés et démontés du ou des axes d'agrippement 171, et à pivoter par rapport au châssis 11 autour de l'axe d'agrippement 171 ou de son axe d'agrippement 171, lorsque les points de relevage secondaires 1011 sont montés sur le ou les axes d'agrippement 171. Comme cela décrit plus en détail dans la suite de la description, la chape d'attelage 14 peut être montée pivotante sur le châssis 11 autour du premier axe de pivotement 17 par l'intermédiaire du ou de chacun des deux axes d'agrippement 171. Une liaison rotule est par exemple prévue entre chaque point de relevage secondaire 1011 et le ou son axe d'agrippement 171. Pour cela, le ou chaque axe d'agrippement 171 porte une noix de rotule (non représentée), tandis que chaque point de relevage secondaire 1011 porte une cage de rotule (non représentée) dans laquelle la noix de rotule est articulée, lorsque le point de relevage secondaire 1011 est monté sur le ou son axe d'agrippement 171. Chaque point de relevage secondaire 1011 peut être formé par un crochet. En variante, chaque point de relevage secondaire 1011 porte à la fois la noix de rotule et la cage de rotule dans laquelle la noix de rotule est articulée, la noix de rotule étant en outre traversée par le ou un des axes d'agrippement 171, lorsque le point de relevage secondaire 1011 est monté sur le ou son axe d'agrippement 171.

Les points de relevage secondaires 1011 sont par exemple situés en partie basse de l'engin agricole 100, de manière à coopérer avec une partie basse du châssis 11 du pulvérisateur agricole 10.

Les points de relevage secondaires 1011 peuvent encore être agencés globalement dans un même plan horizontal.

Les points de relevage secondaires 1011 sont par exemple chacun ménagés à l'extrémité libre d'un bras de relevage 1012, dit secondaire, monté pivotant sur une structure 105 de l'engin agricole 100, autour d'un axe de relevage 1013, dit secondaire, globalement horizontal.

Le pivotement de chacun des bras de relevage secondaire 1012 portant l'un des points de relevage secondaires 1011 est notamment commandé par un vérin de relevage 1014. Le vérin de relevage 1014 est destiné à entraîner le bras de relevage 1012 en pivotement depuis une position basse vers une position intermédiaire dans laquelle les points de relevage secondaires 1011 sont plus hauts qu'en position basse et sont en prise avec le châssis 11 du pulvérisateur agricole 10 qui occupe la position abaissée et est donc posé sur le sol S, et depuis la position intermédiaire vers une position haute dans laquelle les points de relevage secondaires 1011 sont plus hauts qu'en position intermédiaire et le châssis 11 du pulvérisateur agricole 10 occupe la position relevée. Le vérin de relevage 1014 est aussi destiné à entraîner le bras de relevage 1012 en pivotement depuis la position haute vers la position basse, en passant par la position intermédiaire, de manière à baisser le châssis 11 du pulvérisateur 10 jusqu'à la position abaissée et à le relâcher une fois qu'il occupe la position abaissée.

Le système de relevage 101 comprend en outre un point de relevage 102, dit principal, destiné à être monté de manière réversible sur l'axe d'attelage 16, le point de relevage principal 102 pouvant ainsi être monté et démonté de l'axe d'attelage 16, et à pivoter par rapport à la chape d'attelage 14 autour de l'axe d'attelage 16, lorsque le point de relevage 102 est monté sur l'axe d'attelage 16.

Le point de relevage principal 102 est en outre destiné à entraîner en pivotement la chape d'attelage 14 entre la position écartée et la position rapprochée, lorsque le point de relevage principal 102 est monté sur l'axe d'attelage 16 (figures 2 à 6 et 8 à 10).

Une liaison rotule est par exemple prévue entre le point de relevage principal 102 et l'axe d'attelage 16. Pour cela, l'axe d'attelage 16 porte une noix de rotule (non représentée), tandis que le point de relevage principal 102 porte une cage de rotule (non représentée) dans laquelle la noix de rotule est articulée, lorsque le point de relevage principal 102 est monté sur l'axe d'attelage. Le point de relevage principal 102 peut être formé par un crochet. En variante, le point de relevage principal 102 porte à la fois la noix de rotule et la cage de rotule dans laquelle la noix de rotule est articulée, la noix de rotule étant en outre traversée par l'axe d'attelage 16, lorsque le point de relevage principal 102 est monté sur l'axe d'attelage 16.

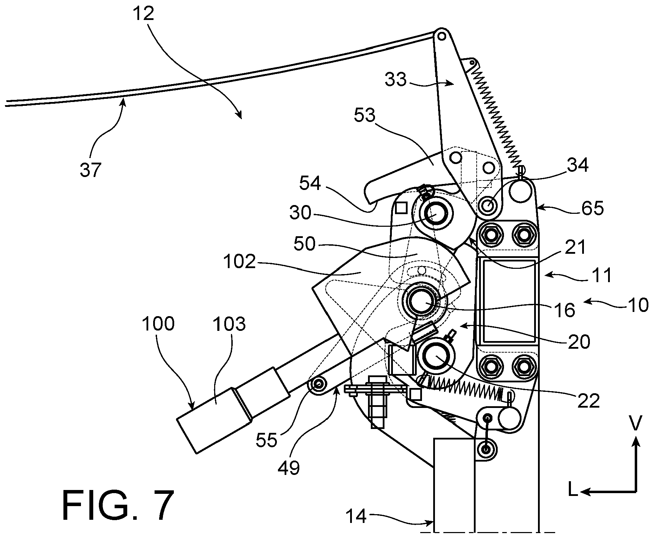

Comme cela sera décrit plus en détail dans la suite de la description, le pulvérisateur agricole 10 est attelé à l'engin agricole 100, lorsque le point de relevage principal 102 est monté sur l'axe d'attelage 16, que la chape d'attelage 14 occupe la position rapprochée et que le dispositif de verrouillage 20, 21, 23 verrouille le pivotement de la chape d'attelage 14, dans le premier sens de pivotement allant de la position rapprochée et la position écartée (figures 6 et 7). Les points de relevage secondaires 1011 peuvent en outre être en prise avec le châssis 11, les bras de relevage secondaires 1012 occupant notamment la position intermédiaire.

Le pulvérisateur agricole 10 est en revanche dételé de l'engin agricole 100, lorsque le point de relevage principal 102 est démonté de la chape d'attelage 14 (figure 1). Les points de relevage secondaires 1011 peuvent en outre avoir relâché le châssis 11.

Le point de relevage principal 102 est notamment destiné à entraîner en pivotement la chape d'attelage 14 depuis la position écartée vers la position rapprochée, lorsque l'engin agricole 100 recule vers l'avant du châssis 11 du pulvérisateur agricole 10 (figures 1 à 6), et à entraîner en pivotement la chape d'attelage 14 depuis la position rapprochée vers la position écartée, lorsque l'engin agricole 100 avance en s'éloignant de l'avant du châssis 11 (figures 9 et 10). Lorsque le pulvérisateur agricole 10 est attelé à l'engin agricole 100 et donc que l'arrière de l'engin agricole 100 est suffisamment proche de l'avant du châssis 11, les points de relevage secondaires 1011 peuvent venir en prise avec le châssis 11, notamment par pivotement des bras de relevage secondaires 1012 jusqu'à la position intermédiaire. Le point de relevage principal 102 peut en outre entraîner en pivotement la chape d'attelage 14 vers la position écartée, après que les points de relevage secondaires 1011 aient relâché le châssis 11.

Le point de relevage principal 102 est par exemple situé en partie haute de l'engin agricole 100. Le point de relevage principal 102 et les points de relevage secondaires 1011 peuvent former les trois sommets d'un triangle dont la base définie entre les points de relevage secondaires 1011 est globalement horizontale.

Le point de relevage principal 102 est par exemple ménagé à l'extrémité libre d'un bras de relevage 103, dit principal, monté pivotant sur la structure 105 de l'engin agricole 100 autour d'un axe de relevage 104, dit principal, globalement horizontal, notamment orienté globalement transversalement (figure 2). Lorsque le point de relevage principal 102 est monté sur l'axe d'attelage 16, l'axe de relevage principal 104 du bras de relevage principal 103 peut être sensiblement parallèle à l'axe d'attelage 16.

Le montage et le démontage du point de relevage principal 102 et de l'axe d'attelage 16 sont par exemple réalisés par pivotement du bras de relevage principal 103 autour de son axe de relevage principal 104. Le pivotement du bras de relevage principal 103, pour monter le point de relevage principal 102 sur l'axe d'attelage 16, est notamment commandé manuellement par un utilisateur, tel qu'un agriculteur.

L'axe d'attelage 16 est par exemple destiné à entraîner le bras de relevage principal 103 en pivotement autour de l'axe de relevage principal 104, entre une première position angulaire (figure 6) et une deuxième position angulaire (figure 7) dans laquelle le point de relevage principal 102 est situé plus haut que dans la première position angulaire, lorsque le pulvérisateur agricole 10 est attelé à l'engin agricole 100 et que le système de relevage 101 lève et baisse le châssis 11 du pulvérisateur agricole 10 entre les positions abaissée et relevée.

Lorsque le bras de relevage principal 103 occupe la première position angulaire, le châssis 11 du pulvérisateur agricole 10 occupe la position abaissée. Lorsque le bras de relevage principal 103 occupe la deuxième position angulaire, le châssis 11 du pulvérisateur agricole 10 occupe la position relevée et est donc porté par l'engin agricole 100.

Dans les première et deuxième positions angulaires, le bras de relevage principal 103 forme avec l'horizontale un angle différent. Cet angle dépend de l'engin agricole 100. Le point de relevage principal 102 peut être situé en dessous de, au niveau de ou au-dessus d'un plan horizontal comprenant l'axe de relevage principal 104, lorsque le bras de relevage principal 103 occupe la première position angulaire. Il est en revanche toujours au-dessus de ce plan horizontal, lorsque le bras de relevage principal 103 occupe la deuxième position angulaire. L'attelage du pulvérisateur agricole 10 à l'engin agricole 100 est ainsi réalisé comme suit (figures 1 à 6).

Le châssis 11 du pulvérisateur agricole 10 est posé sur le sol S. La chape d'attelage 14 pivote depuis la position écartée vers la position rapprochée sous l'effet du point de relevage principal 102 du système de relevage 101 de l'engin agricole 100 qui est monté sur l'axe d'attelage 16 (figures 2 à 5) et le cas échéant de l'engin agricole 100 qui recule vers l'avant du châssis 11. Lorsque la chape d'attelage 14 atteint la position rapprochée, le dispositif de verrouillage 20, 21, 23 verrouille automatiquement le pivotement de la chape d'attelage 14 par rapport au châssis 11, dans le premier sens de pivotement allant de la position rapprochée à la position écartée (figure 6). Les points de relevage secondaires 1011 du système de relevage 101 de l'engin agricole 100 peuvent en outre venir en prise avec le châssis 11, les bras de relevage secondaires 1012 pivotant notamment depuis la position basse jusqu'à la position intermédiaire. Le pulvérisateur agricole 10 est ainsi attelé à l'engin agricole 100.

Le système de relevage 101 peut alors lever le châssis 11 du pulvérisateur agricole 10 jusqu'à la position relevée, notamment au moyen des points de relevage secondaires 1011, des bras de relevage secondaires 1012 et des vérins de relevage 1014 qui leur sont associés, de manière à porter le pulvérisateur agricole 10. Le cas échéant, lorsque le système de relevage 101 lève le châssis 11 vers la position relevée, l'axe d'attelage 16 entraîne en pivotement le bras de relevage principal 103 jusqu'à la deuxième position angulaire (figure 7). Lorsque le pulvérisateur agricole 10 est porté par l'engin agricole 100, l'engin agricole 100 et le pulvérisateur agricole 10 sont prêts pour aller pulvériser du liquide de traitement dans le champ de végétaux à traiter. Le point de relevage principal 102 empêche le pulvérisateur agricole 10 de basculer, notamment vers l'arrière, lorsque le système de relevage 101 lève et baisse le châssis 11 et lorsque le châssis 11 occupe la position relevée, c'est-à-dire dès que le châssis 11 n'est plus posé sur le sol S.

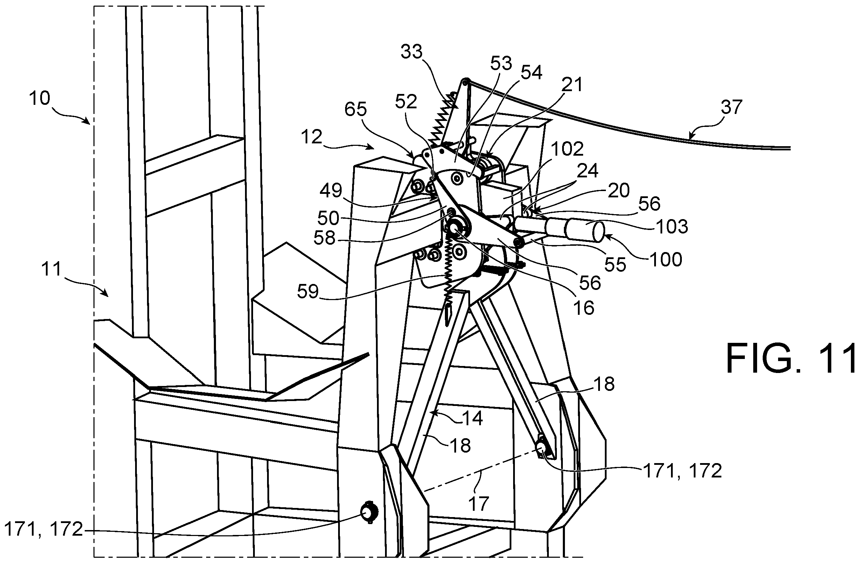

Selon l'invention, l'axe d'attelage 16 est en outre situé au-dessus du premier axe de pivotement 17 de la chape d'attelage 14, lorsque la chape d'attelage 14 occupe la position rapprochée (figure 11).

De cette manière, la position rapprochée de la chape d'attelage 14 correspond à une position haute de l'axe d'attelage 16, tandis que sa position écartée correspond à une position basse de l'axe d'attelage 16. La chape d'attelage 14 pivote donc de la position écartée vers la position rapprochée, du bas vers le haut.

Lors de la conception du pulvérisateur agricole 10, il peut ainsi être prévu d'augmenter la distance d entre l'axe d'attelage 16 et le premier axe de pivotement 17, en éloignant le premier axe de pivotement 17 vers le bas, de manière à allonger la chape d'attelage 14 et ainsi augmenter la distance maximale autorisée entre l'arrière de l'engin agricole 100 et l'avant du châssis 11 du pulvérisateur agricole 10 pour monter le point de relevage principal 102 du système de relevage 101 de l'engin agricole 100 sur l'axe d'attelage 16. Augmenter cette distance maximale revient à pouvoir espacer davantage l'engin agricole 100 du pulvérisateur agricole 10 pour monter le point de relevage principal 102 sur l'axe d'attelage 16, ce qui a pour avantage de faciliter, pour l'agriculteur, l'accès et la manipulation du point de relevage principal 102 et de la chape d'attelage 14 dans ce but. Il en est de même des éventuelles connexions à établir entre le pulvérisateur agricole 10 et l'engin agricole 100 qui sont elles aussi facilitées par un plus grand espacement entre l'engin agricole 100 et le pulvérisateur agricole 10. Il s'agit par exemple de connexions hydrauliques et/ou électriques. Le couplage mécanique d'une prise de force (non représentée) de l'engin agricole 100, notamment via un cardan de transmission (non représenté), à la pompe de pulvérisation du pulvérisateur agricole 10 est lui aussi ainsi facilité. Ce couplage mécanique permet d'assurer l'entraînement de la pompe de pulvérisation de manière à aspirer et à refouler le liquide de traitement pour alimenter les buses.

Par ailleurs, le point de relevage principal 102 étant plutôt situé en partie haute de l'engin agricole 100, le fait de positionner le premier axe de pivotement 17 en dessous plutôt qu'au-dessus de l'axe d'attelage 16 permet d'augmenter davantage la distance d entre le premier axe de pivotement 17 et l'axe d'attelage 16, en éloignant le premier axe de pivotement 17 vers le bas, pour allonger la chape d'attelage 14 et ainsi augmenter la distance maximale autorisée entre l'arrière de l'engin agricole et l'avant du châssis 11 du pulvérisateur agricole 10.

Cela permet en outre de monter pivotante la chape d'attelage 14 autour du premier axe de pivotement 17 par l'intermédiaire du ou de chacun des deux axes d'agrippement 171, ce qui ne serait pas possible avec un premier axe de pivotement 17 situé au-dessus de l'axe d'attelage 16, lorsque la chape d'attelage 14 occupe la position rapprochée.

De manière plus générale, le montage du point de relevage principal 102 sur l'axe d'attelage 16, le cas échéant le raccordement des connexions hydrauliques et électriques et/ou le couplage mécanique de la prise de force de l'engin agricole 100 à la pompe de pulvérisation pouvant être réalisés avant le recul de l'engin agricole 100 vers le châssis 11 pour atteler le pulvérisateur agricole 10 à l'engin agricole 100, le système d'attelage 12 permet de prévoir un relevage du châssis 11 du pulvérisateur agricole 10 au plus proche de l'engin agricole 100, et donc de minimiser les efforts appliqués par le pulvérisateur agricole 10 sur l'engin agricole 100 du fait de son montage en porte-à-faux.

La chape d'attelage 14 comprend par exemple deux branches 18 s'étendant chacune depuis une première extrémité portant l'axe d'attelage 16, en s'écartant l'une de l'autre, vers une deuxième extrémité par l'intermédiaire de laquelle la chape d'attelage 14 est montée pivotante sur le châssis 11 du pulvérisateur agricole 10 autour du premier axe de pivotement 17 (figure 11). La chape d'attelage 14 présente ainsi globalement une forme de V dont le sommet est formé par l'axe d'attelage 16 et les extrémités opposées à l'axe d'attelage 16 sont montées pivotante sur le châssis 11 autour du premier axe de pivotement 17.

Les branches 18 de la chape d'attelage 14 définissent en outre, entre elles, un espace libre qui peut donner accès à la pompe de pulvérisation depuis l'engin agricole 100 pour coupler mécaniquement la prise de force de l'engin agricole 100 à la pompe de pulvérisation, notamment au moyen du cardan de transmission.

Le premier axe de pivotement 17 peut être matérialisé par un ou deux axes mécaniques 172 coaxiaux montés solidaires sur le châssis 11 du pulvérisateur agricole 10. Ces deux axes mécaniques 172 sont par exemple confondus avec les deux axes d'agrippement 171.

La chape d'attelage 14 est par exemple montée pivotante sur le ou les axes mécaniques 172 par l'intermédiaire d'au moins un orifice de montage coaxial avec le ou les axes mécaniques 172. Le ou les orifices de montage présentent une forme oblongue suivant une direction radiale au premier axe de pivotement 17, de manière à prévoir un jeu entre le ou les axes mécaniques 172 et le ou les orifices de montage. Cela permet de rattraper un défaut d'alignement entre le point de relevage principal 102 et l'axe d'attelage 16, qui intervient par exemple lorsque l'attelage est réalisé sur sol accidenté.

Le dispositif de verrouillage 20, 21, 23 du système d'attelage 12 du pulvérisateur agricole 10 comprend par exemple un premier verrou 20, ainsi qu'un deuxième verrou 21.

Le premier verrou 20 est monté pivotant sur le châssis 11 du pulvérisateur agricole 10 autour d'un deuxième axe de pivotement 22 sensiblement parallèle à l'axe d'attelage 16 (figures 2 à 10).

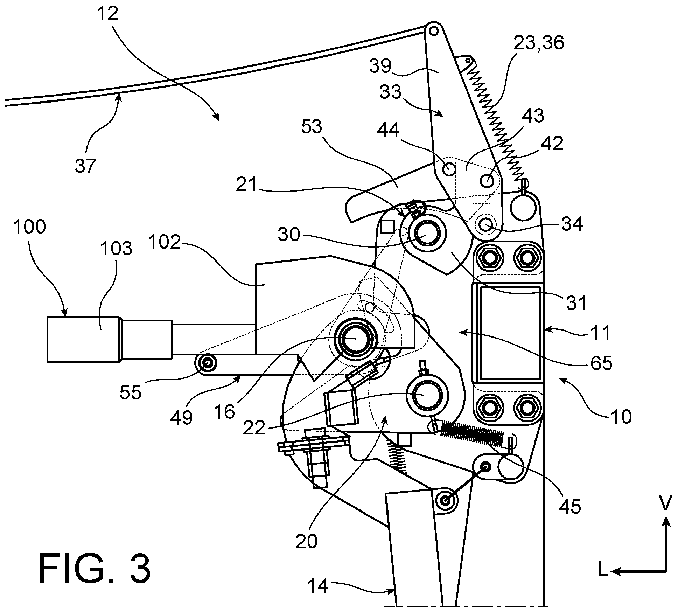

L'axe d'attelage 16 est conçu pour coopérer avec le premier verrou 20 et pour entraîner le premier verrou 20 en pivotement, entre une position de déverrouillage (figures 1 et 2) dans laquelle la chape d'attelage 14 est libre de pivoter vers la position rapprochée et vers la position écartée et une position de verrouillage (figure 6) dans laquelle le pivotement de la chape d'attelage 14, dans le premier sens de pivotement allant de la position rapprochée à la position écartée, est verrouillé, lorsque la chape d'attelage 14 pivote entre la position écartée et la position rapprochée (figures 3 à 6 et 9 à 10).

Lorsque la chape d'attelage 14 occupe la position écartée, le premier verrou 20 occupe la position de déverrouillage (figure 1). Lorsque la chape d'attelage 14 occupe la position rapprochée, le premier verrou 20 occupe la position de verrouillage (figure 6).

Le premier verrou 20 verrouille par exemple aussi le pivotement de la chape d'attelage 14, dans un deuxième sens de pivotement allant de la position écartée à la position rapprochée, lorsque la chape d'attelage 14 occupe la position rapprochée et que le premier verrou 20 occupe la position de verrouillage. Autrement dit, lorsque la chape d'attelage 14 occupe la position rapprochée et que le premier verrou 20 occupe la position de verrouillage, le premier verrou 20 bloque non seulement le pivotement de la chape d'attelage 14 dans le premier sens de pivotement, c'est-à-dire depuis la position rapprochée vers la position écartée, mais aussi dans le deuxième sens de pivotement qui lui est opposé, c'est-à-dire au-delà de la position rapprochée.

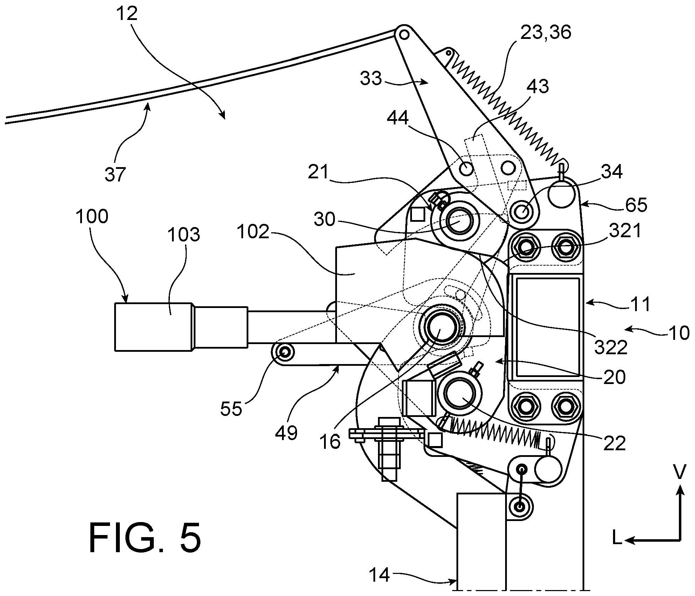

Le deuxième verrou 21 est monté mobile sur le châssis 11 du pulvérisateur agricole 10, entre une position de repos (figure 3) et une position contrainte (figure 5) dans laquelle un premier organe de rappel élastique 23 rappelle le deuxième verrou 21 en déplacement vers la position de repos.

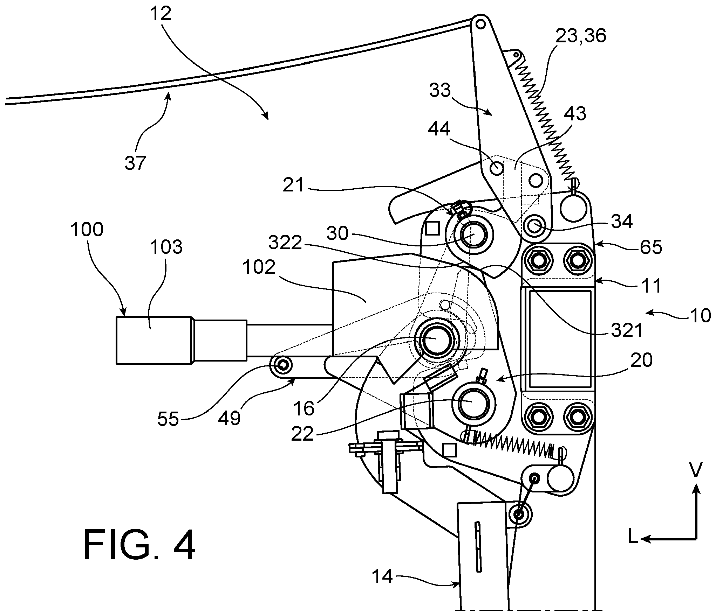

Le premier verrou 20 est conçu pour entraîner le deuxième verrou 21 en déplacement depuis la position de repos vers la position contrainte, lorsque le premier verrou 20 pivote depuis la position de déverrouillage vers la position de verrouillage (figures 3 et 4), et pour relâcher le deuxième verrou 21, lorsque le premier verrou 20 atteint la position de verrouillage (figure 5).

Le deuxième verrou 21 est en outre conçu pour venir en butée contre le premier verrou 20, lorsque le premier verrou 20 atteint la position de verrouillage et que le deuxième verrou 21 se déplace depuis la position contrainte vers la position de repos sous l'effet du premier organe de rappel élastique 23, de sorte à verrouiller automatiquement le pivotement du premier verrou 20, dans un sens de pivotement allant de la position de verrouillage vers la position de déverrouillage, et donc le pivotement de la chape d'attelage 14, dans le premier sens de pivotement allant de la position rapprochée à la position écartée, lorsque la chape d'attelage 14 atteint la position rapprochée (figure 6).

De cette manière, lorsque la chape d'attelage 14 pivote depuis la position écartée vers la position rapprochée sous l'effet du point de relevage principal 102 du système de relevage 101 de l'engin agricole 100 qui est monté sur l'axe d'attelage 16, l'axe d'attelage 16 entraîne en pivotement le premier verrou 20 depuis la position de déverrouillage vers la position de verrouillage, le premier verrou 20 entraînant lui-même en pivotement le deuxième verrou 21 depuis la position de repos vers la position contrainte (figures 3 et 4). Lorsque la chape d'attelage 14 atteint la position rapprochée et que le premier verrou 20 atteint la position de verrouillage, le premier verrou 20 relâche le deuxième verrou 21 (figure 5) qui se déplace de la position contrainte vers la position de repos sous l'effet du premier organe de rappel élastique 23 et vient en butée contre le premier verrou 20 (figure 6), bloquant ainsi le pivotement du premier verrou 20 dans le sens de pivotement allant de la position de verrouillage à la position de déverrouillage, et donc le pivotement de la chape d'attelage 14 dans le premier sens de pivotement allant de la position rapprochée à la position écartée.

Le pulvérisateur agricole 10 est ainsi attelé à l'engin agricole 100 (figure 6), lorsque le point de relevage principal 102 du système de relevage 101 de l'engin agricole 100 est monté sur l'axe d'attelage 16, que la chape d'attelage 14 occupe la position rapprochée, que le premier verrou 20 occupe la position de verrouillage et que le deuxième verrou 21 est en butée contre premier verrou 20, bloquant le pivotement du premier verrou 20 vers sa position de déverrouillage.

Le premier verrou 20 comprend par exemple au moins une surface de came 321 conçue pour entraîner le deuxième verrou 21 en pivotement depuis la position de repos vers la position contrainte, lorsque le premier verrou 20 pivote depuis la position de déverrouillage vers la position de verrouillage, par l'intermédiaire d'une première surface de suiveur de came 322 portée par le deuxième verrou 21 (figures 4 et 5). La surface de came 321 et la première surface de suiveur de came 322 sont en contact l'une avec l'autre, lorsque le premier verrou 20 pivote depuis la position de déverrouillage vers la position de verrouillage et entraîne en pivotement le deuxième verrou 21 depuis la position de repos vers la position contrainte. La surface de came 321 et la première surface de suiveur de came 322 sont par exemple sensiblement parallèles à l'axe d'attelage 16.

Le premier verrou 20 comprend par exemple au moins un crochet 24 conçu pour coopérer avec l'axe d'attelage 16 (figure 11). Le premier verrou 20 peut comprendre deux crochets 24 qui sont symétriques par rapport à un plan de symétrie, perpendiculaire au deuxième axe de pivotement 22, et qui sont reliés l'un à l'autre par l'intermédiaire d'un manchon (non représenté) coaxial avec le deuxième axe de pivotement 22 (figure 11). Les deux crochets 24 et le manchon sont en outre solidaires en pivotement autour du deuxième axe de pivotement 22. Pour cela, ils peuvent être monoblocs ou encore formés d'un seul tenant. Le point de relevage principal 102, notamment le crochet formant le point de relevage principal 102, est par exemple destiné à être transversalement interposé entre les deux crochets 24 du premier verrou 20 (figure 11), lorsqu'il est monté sur l'axe d'attelage 16.

Le ou chaque crochet 24 définit une fente 25 s'étendant suivant une ligne d'extension comprise dans un plan perpendiculaire au deuxième axe de pivotement 22, entre une ouverture 26 par l'intermédiaire de laquelle l'axe d'attelage 16 s'insère dans la fente 25, lorsque la chape d'attelage 14 pivote depuis la position écartée vers la position rapprochée, et un fond 27 opposé à l'ouverture 26 (figure 10). L'ouverture 26 est en outre reliée au fond 27 par l'intermédiaire de deux parois 28, 29 opposées par l'intermédiaire desquelles l'axe d'attelage 16 coopère avec le premier verrou 20 pour l'entraîner en pivotement (figure 10). Lorsque la chape d'attelage 14 occupe la position rapprochée et que le premier verrou 20 occupe la position de verrouillage, les parois 28, 29 forment en outre des butées, bloquant, via l'axe d'attelage 16, le pivotement de la chape d'attelage 14, respectivement dans le premier sens de pivotement, c'est-à-dire vers la position écartée, et dans le deuxième sens de pivotement, c'est-à-dire au-delà de la position rapprochée (figure 6). L'ouverture 26 est par exemple globalement orientée vers l'avant, lorsque le premier verrou 20 occupe la position de déverrouillage (figure 1). L'ouverture 26 peut en outre être globalement orientée vers le haut, lorsque le premier verrou 20 occupe la position de verrouillage (figure 6).

La surface de came 321 du premier verrou 20 est par exemple portée par le ou chaque crochet 24 du premier verrou 20.

Le deuxième verrou 21 est par exemple monté pivotant sur le châssis 11 du pulvérisateur agricole 10, autour d'un troisième axe de pivotement 30 sensiblement parallèle à l'axe d'attelage 16, entre la position de repos et la position contrainte (figures 3 à 10).

En variante (non représentée), le deuxième verrou 21 est monté coulissant sur le châssis 11 du pulvérisateur agricole 10 suivant un axe de coulissement, entre la position de repos et la position contrainte.

Le deuxième verrou 21 comprend par exemple au moins un corps 31 par l'intermédiaire duquel le premier verrou 20 entraîne le deuxième verrou 21 en pivotement depuis la position de repos vers la position contrainte, lorsque le premier verrou 20 pivote depuis la position de déverrouillage vers la position de verrouillage (figure 3). Le deuxième verrou 21 peut comprendre deux corps 31 qui sont symétriques par rapport à un plan de symétrie, perpendiculaire au troisième axe de pivotement 30, et qui sont reliés l'un à l'autre par l'intermédiaire d'un manchon (non représenté) coaxial avec le troisième axe de pivotement 30, les deux corps 31 et le manchon étant solidaires en pivotement autour du troisième axe de pivotement 30. Chaque corps 31 du deuxième verrou 21 coopère par exemple avec l'un des crochets 24 du premier verrou 20.

La première surface de suiveur de came 322 du deuxième verrou 21 est par exemple portée par le ou chaque corps 31 du deuxième verrou 21.

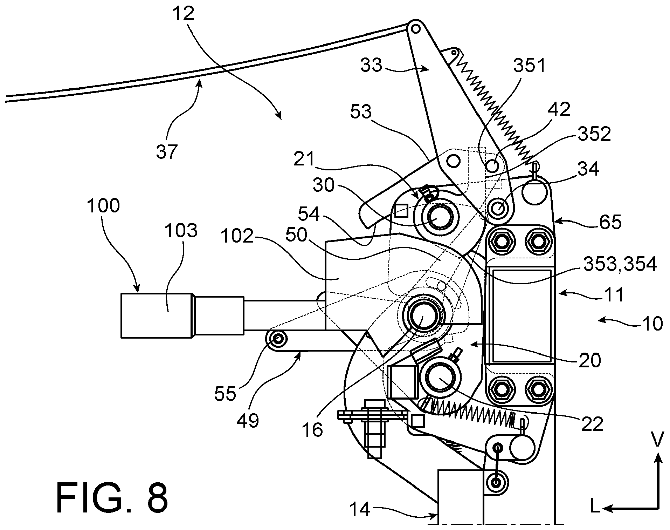

Le système d'attelage 12 comprend par exemple aussi un dispositif de déblocage 33, 36, 37 conçu pour débloquer manuellement le pivotement de la chape d'attelage 14 par rapport au châssis 11 du pulvérisateur agricole 10, dans le premier sens de pivotement allant de la position rapprochée à la position écartée, lorsque la chape d'attelage 14 occupe la position rapprochée (figures 8 et 9). Le déblocage de la chape d'attelage 14 en position rapprochée s'effectue ainsi par actionnement manuel du dispositif de déblocage 33, 36, 37, notamment par l'agriculteur.

De cette manière, le dételage du pulvérisateur agricole 10 et de l'engin agricole 100 est réalisé de la manière suivante (figures 8 à 10).

Le système de relevage 101 de l'engin agricole 100 peut au préalable avoir baissé le châssis 11 du pulvérisateur agricole 10 jusqu'à la position abaissée, notamment par pivotement des bras de relevage 1012 depuis la position haute jusqu'à la position intermédiaire, de manière à poser le châssis 11 sur le sol S, l'axe d'attelage 16 entraînant le cas échéant en pivotement le bras de relevage principal 103 jusqu'à la première position angulaire. Les points de relevage secondaires 1011 peuvent en outre relâcher le châssis 11 du pulvérisateur agricole 10, notamment par pivotement des bras de relevage secondaires 1012 depuis la position intermédiaire jusqu'à la position basse.

La chape d'attelage 14 occupe la position rapprochée. Le dispositif de déblocage 33, 36, 37 débloque le pivotement de la chape d'attelage 14, dans le premier sens de pivotement allant de la position rapprochée à la position écartée (figures 8 et 9). La chape d'attelage 14 pivote alors depuis la position rapprochée vers la position écartée sous l'effet du point de relevage principal 102 du système de relevage 101 de l'engin agricole 100 qui est monté sur l'axe d'attelage 16 (figure 10) et le cas échéant de l'engin agricole 100 qui avance en s'éloignant de l'avant du châssis 11. Lorsque la chape d'attelage 14 atteint la position écartée, le point de relevage principal 102 peut en outre être démonté de l'axe d'attelage 16, de manière à dételer le pulvérisateur agricole 10 de l'engin agricole 100 (figure 1).

Le dispositif de déblocage 33, 36, 37 peut comprendre un organe de déblocage 33 monté mobile sur le châssis 11 du pulvérisateur agricole 10, entre une position de blocage et une position de déblocage.

L'organe de déblocage 33 est par exemple monté pivotant sur le châssis 11 du pulvérisateur agricole 10, autour d'un quatrième axe de pivotement 34 sensiblement parallèle à l'axe d'attelage 16, entre la position de blocage et la position de déblocage (figures 3 à 10).

En variante (non représentée), l'organe de déblocage 33 est monté coulissant sur le châssis 11 du pulvérisateur agricole 10 suivant un axe de coulissement, entre la position de blocage et la position de déblocage.

L'organe de déblocage 33 est conçu pour entraîner le deuxième verrou 21 en déplacement, notamment en pivotement, depuis la position de repos vers la position contrainte, lorsque l'organe de déblocage 33 se déplace, notamment pivote, depuis la position de blocage vers la position de déblocage (figures 8 et 9).

Le deuxième verrou 21 est en outre conçu pour maintenir le premier verrou 20 en position de verrouillage, lorsque le deuxième verrou 21 se déplace, notamment pivote, depuis la position de repos vers la position contrainte sous l'effet du déplacement, notamment du pivotement, de l'organe de déblocage 33 depuis la position de blocage vers la position de déblocage (figure 8), et pour relâcher le premier verrou 20, lorsque le deuxième verrou 21 atteint la position contrainte (figure 9).

De cette manière, lorsque l'organe de déblocage 33 se déplace, notamment pivote, depuis la position de blocage vers la position de déblocage, l'organe de déblocage 33 entraîne en déplacement, notamment en pivotement, le deuxième verrou 21 depuis la position de repos vers la position contrainte, tandis que le deuxième verrou 21 maintient le premier verrou 20 dans la position de verrouillage (figure 8). Lorsque l'organe de déblocage 33 atteint la position de déblocage et que le deuxième verrou 21 atteint la position contrainte, le deuxième verrou 21 libère ou encore relâche le premier verrou 20, qui est ainsi libre de pivoter dans le sens de pivotement allant de la position de verrouillage à la position de déverrouillage (figure 9). La chape d'attelage 14 est alors elle-même libre de pivoter dans le premier sens de pivotement, depuis la position rapprochée vers la position écartée (figure 10).

L'organe de déblocage 33 comprend par exemple au moins une surface de came 351 conçue pour entraîner le deuxième verrou 21 en déplacement, notamment en pivotement, depuis la position de repos vers la position contrainte, lorsque l'organe de déblocage 33 se déplace, notamment pivote, depuis la position de blocage vers la position de déblocage, par l'intermédiaire d'une deuxième surface de suiveur de came 352 portée par le deuxième verrou 21 (figures 8 et 9). La surface de came 351 et la deuxième surface de suiveur de came 352 sont en contact l'une avec l'autre, lorsque l'organe de déblocage 33 se déplace, notamment pivote, depuis la position de blocage vers la position de déblocage et entraîne le deuxième verrou 21 en déplacement, notamment en pivotement, depuis la position de repos vers la position contrainte. La surface de came 351 et la deuxième surface de suiveur de came 352 sont par exemple sensiblement parallèles à l'axe d'attelage 16.

Le deuxième verrou 21 comprend par exemple au moins une surface de came 353 conçue pour maintenir le premier verrou 20 en position de verrouillage, lorsque le deuxième verrou 21 se déplace, notamment pivote, depuis la position de repos vers la position contrainte, par l'intermédiaire d'une surface de suiveur de came 354 portée par le premier verrou 20 (figures 8 et 9). La surface de came 353 et la surface de suiveur de came 354 sont en contact l'une avec l'autre, lorsque le deuxième verrou 21 pivote depuis la position de repos vers la position contrainte et maintient le premier verrou 20 en position de verrouillage. La surface de came 353 et la surface de suiveur de came 354 sont par exemple sensiblement parallèles à l'axe d'attelage 16.

La surface de came 321 et la surface de suiveur de came 354 du premier verrou 20 sont par exemple agencées dans le prolongement l'une de l'autre et sont séparées l'une de l'autre par un sommet ou une arête.

La première surface de suiveur de came 322 et la surface de came 353 du deuxième verrou 21 sont par exemple agencées dans le prolongement l'une de l'autre et sont séparées l'une de l'autre par un sommet ou une arête, qui peut coopérer avec le sommet ou l'arête du premier verrou 20, lorsque le premier verrou 20 occupe la position de verrouillage et que le deuxième verrou 21 occupe la position contrainte.

Le dispositif de déblocage 33, 36, 37 comprend par exemple aussi un deuxième organe de rappel élastique 36 (figures 3 à 5 et 9) conçu pour rappeler élastiquement l'organe de déblocage 33 en déplacement, notamment en pivotement, vers la position de blocage. De cette manière, une action manuelle est nécessaire pour déplacer l'organe de déblocage 33 vers la position de déblocage et donc pour atteindre cette position dans laquelle le dispositif de verrouillage 20, 21, 23 déverrouille le pivotement de la chape d'attelage 14 dans le premier sens de pivotement allant de la position rapprochée vers la position écartée. Il n'y a donc pas de risque de déverrouillage inopiné de la chape d'attelage 14.

Le deuxième organe de rappel élastique 36 est par exemple formé d'un ressort de traction comprenant une première extrémité montée sur l'organe de déblocage 33, notamment sur un premier corps 39 de l'organe de déblocage 33, et une deuxième extrémité opposée montée sur le châssis 11 du pulvérisateur agricole 10. D'autres types de ressort monté entre l'organe de déblocage 33 et le châssis 11 peuvent bien sûr être prévus. D'autres types d'organe de rappel élastique peuvent bien sûr aussi être prévus.

Le dispositif de déblocage 33, 36, 37 comprend par exemple aussi un organe d'actionnement 37 conçu pour entraîner l'organe de déblocage 33 en déplacement, notamment en pivotement, depuis la position de blocage vers la position de déblocage. L'organe d'actionnement 37 est par exemple formé d'une corde ou cordelette comprenant une première extrémité fixée à l'organe de déblocage 33 et une deuxième extrémité (non représentée) opposée qui est libre et par l'intermédiaire de laquelle l'agriculteur tire sur la corde 37, notamment vers l'avant, de manière à entraîner en déplacement, notamment en pivotement, l'organe de déblocage 33 depuis la position de blocage vers la position de déblocage. L'agriculteur peut tirer sur la corde 37 depuis une cabine conducteur (non représentée) de l'engin agricole 100. Un câble métallique, une élingue ou une chaîne peuvent remplacer la corde 37.

L'organe de déblocage 33 comprend par exemple un premier corps 39 s'étendant entre une première extrémité par l'intermédiaire de laquelle le premier corps 39 est monté pivotant sur la châssis 11 du pulvérisateur agricole 10 autour du quatrième axe de pivotement 34, et une deuxième extrémité opposée à laquelle la corde 37 peut être fixée. L'organe de déblocage 33 comprend par exemple aussi un premier axe 42 solidaire du premier corps 39 et parallèle au quatrième axe de pivotement 34. Le premier axe 42 est conçu pour coopérer avec une patte 43 du deuxième verrou 21, qui s'étend depuis le ou chaque corps 31 dudit deuxième verrou 21, et pour entraîner le deuxième verrou 21 en déplacement, notamment en pivotement, depuis la position de repos vers la position contrainte par l'intermédiaire de ladite ou lesdites pattes 43, lorsque l'organe de déblocage 33 se déplace, notamment pivote, depuis la position de blocage vers la position de déblocage (figures 3 et 9). Le premier axe 42 de l'organe de déblocage 33 est par exemple situé longitudinalement à l'arrière de la ou des pattes 43 du deuxième verrou 21 avec laquelle ou lesquelles il coopère.

La surface de came 351 de l'organe de déblocage 33 peut ainsi être portée par le premier axe 42 de l'organe de déblocage 33, tandis que la deuxième surface de suiveur de came 352 du deuxième verrou 21 peut être portée par la ou chaque patte 43 du deuxième verrou 21 (figures 8 et 9).

Le deuxième verrou 21 est par exemple encore conçu pour entraîner l'organe de déblocage 33 en déplacement, notamment en pivotement, depuis la position de blocage vers la position de déblocage, lorsque le premier verrou 20 pivote depuis la position de déverrouillage vers la position de verrouillage et entraîne le deuxième verrou 21 en déplacement, notamment en pivotement, depuis la position de repos vers la position contrainte (figures 4 et 5). Le deuxième verrou 21 peut entraîner l'organe de déblocage 33 en déplacement depuis la position de blocage vers la position de déblocage, par l'intermédiaire de la ou des pattes 43.

L'organe de déblocage 33 est en outre conçu pour entraîner le deuxième verrou 21 en déplacement, notamment en pivotement, depuis la position contrainte vers la position de repos, lorsque le premier verrou 20 atteint la position de verrouillage et relâche le deuxième verrou 21 et que l'organe de déblocage 33 se déplace, notamment pivote, depuis la position de déblocage vers la position de blocage sous l'effet du deuxième organe de rappel élastique 36 (figures 5 et 6).

De cette manière, lorsque le premier verrou 20 atteint la position de verrouillage et libère le deuxième verrou 21, le deuxième organe de rappel élastique 36 rappelle élastiquement l'organe de déblocage 33 vers la position de blocage et donc le deuxième verrou 21 vers la position repos (figures 5 et 6). Ainsi, les premier et deuxième organes de rappel élastique 23, 36 peuvent être confondus.

Pour cela, l'organe de déblocage 33 peut comprendre un deuxième axe 44 solidaire du premier corps 39 et parallèle au premier axe 42 (figures 3 à 5). Le deuxième axe 44 est conçu pour coopérer avec la ou les pattes 43 du deuxième verrou 21, d'une part lorsque le premier verrou 20 pivote depuis la position de déverrouillage vers la position de verrouillage, et d'autre part lorsque le premier verrou 20 atteint la position de verrouillage. De cette manière, la ou les pattes 43 entraînent en déplacement, notamment en pivotement, l'organe de déblocage 33 via le deuxième axe 44, lorsque le premier verrou 20 pivote depuis la position de déverrouillage vers la position de verrouillage, tandis que le deuxième axe 44 entraîne en déplacement, notamment en pivotement, le deuxième verrou 21 via la ou les pattes 43, lorsque le premier verrou 20 atteint la position de verrouillage. Le deuxième axe 44 de l'organe de déblocage 33 est par exemple décalé longitudinalement vers l'avant par rapport au premier axe 42, la ou les pattes 43 du deuxième verrou 21 étant longitudinalement interposées entre les premier et deuxième axes 42, 44 de l'organe de déblocage 33 (figure 3).

En variante (non représentée), le premier organe de rappel élastique 23 est distinct du deuxième organe de rappel élastique 36. Le premier organe de rappel élastique 23 est par exemple formé d'un ressort à spirale monté d'une part sur le deuxième verrou 21 et d'autre part sur le châssis 11. D'autres types de ressort monté entre le deuxième verrou 21 et le châssis 11 peuvent bien sûr être prévus. D'autres types d'organe de rappel élastique peuvent bien sûr aussi être prévus.

Le système d'attelage 12 comprend par exemple aussi un troisième organe de rappel élastique 45 (figures 3 et 9) conçu pour rappeler élastiquement le premier verrou 20 en pivotement dans le sens de pivotement allant de la position de verrouillage à la position de déverrouillage.

De cette manière, lorsque le deuxième verrou 21 atteint la position contrainte sous l'effet du déplacement, notamment du pivotement, de l'organe de déblocage 33 depuis la position de blocage vers la position de déblocage, le premier verrou 20 ainsi relâchée pivote automatiquement dans le sens de pivotement allant de la position de verrouillage à la position de déverrouillage sous l'effet du troisième organe de rappel élastique 45 (figure 9). Ce pivotement du premier verrou 20 empêche ainsi le deuxième verrou 21 de revenir en butée contre le premier verrou 20 en position de verrouillage, en se déplaçant, notamment en pivotant, depuis la position contrainte vers la position de repos sous l'effet du premier organe de rappel élastique 23. Par conséquent, il n'est pas nécessaire de maintenir l'organe de déblocage 33 en position de déblocage, notamment en tirant sur la corde 37, pour maintenir le deuxième verrou 21 en position contrainte et donc pour autoriser le pivotement de la chape d'attelage 14 depuis la position rapprochée vers la position écartée.

Le troisième organe de rappel élastique 45 est par exemple formé d'un ressort de traction comprenant une première extrémité montée sur le premier verrou 20 et une deuxième extrémité opposée montée sur le châssis 11 du pulvérisateur agricole 10. D'autres types de ressort monté entre le premier verrou 20 et le châssis 11 peuvent bien sûr être prévus. D'autres types d'organe de rappel élastique peuvent bien sûr aussi être prévus.

Le système d'attelage 12 comprend par exemple encore un dispositif de sécurité 49, 59 conçu pour automatiquement empêcher le dispositif de déblocage 33, 36, 37 de débloquer le pivotement de la chape d'attelage 14, dans le premier sens de pivotement allant de la position rapprochée à la position écartée, lorsque le châssis 11 du pulvérisateur agricole 10 occupe la position relevée et donc que le pulvérisateur agricole 10 est porté par l'engin agricole 100 (figure 7).

De cette manière, lorsque le pulvérisateur agricole 10 est porté par l'engin agricole 100, il n'est pas possible de débloquer le pivotement de la chape d'attelage 14, dans le premier sens de pivotement allant de la position rapprochée à la position écartée. La chape d'attelage 14 ne peut donc pas pivoter vers la position écartée et le cas échéant faire tomber le pulvérisateur agricole 10 sur le sol S, ce qui risquerait d'entraîner une détérioration du pulvérisateur agricole 10 et/ou du champ de végétaux à traiter, lorsque l'engin agricole 100 roule dans le champ, ou encore de provoquer un accident, lorsque l'engin agricole 100 roule sur la route. Le dispositif de sécurité 49, 59 permet ainsi d'éviter tout déblocage intempestif du pivotement de la chape d'attelage 14, lorsque le pulvérisateur agricole 10 est porté par l'engin agricole 100.

Le dispositif de sécurité 49, 59 est par exemple aussi conçu pour automatiquement empêcher le dispositif de déblocage 33, 36, 37 de débloquer le pivotement de la chape d'attelage 14, dans le premier sens de pivotement allant de la position rapprochée à la position écartée, lorsque le système de relevage 101 lève et abaisse le châssis 11 du pulvérisateur agricole 10 entre les positions abaissée et relevée.

De cette manière, le dispositif de sécurité 49, 59 n'autorise le déblocage du pivotement de la chape d'attelage 14 par le dispositif de déblocage 33, 36, 37, que lorsque le châssis 11 occupe la position abaissée et est donc posé sur le sol S. Le dispositif de sécurité 49, 59 permet ainsi d'éviter tout déblocage intempestif du pivotement de la chape d'attelage 14 dès que le châssis 11 du pulvérisateur agricole 10 n'est plus posé sur le sol S.

Le dispositif de sécurité 49, 59 est par exemple conçu pour automatiquement empêcher l'organe de déblocage 33 de se déplacer, notamment de pivoter, depuis la position de blocage vers la position de déblocage, lorsque le châssis 11 du pulvérisateur agricole 10 occupe la position relevée et, le cas échéant, lorsque le système de relevage 101 lève ou abaisse le châssis 11 entre les positions abaissée et relevée (figure 7).

Pour cela, le dispositif de sécurité 49, 59 peut comprendre un organe de sécurité 49 monté pivotant sur la chape d'attelage 14 autour de l'axe d'attelage 16. L'organe de sécurité 49 est conçu pour pivoter entre une positon de sécurité active (figure 7) dans laquelle l'organe de sécurité 49 bloque le déplacement, notamment le pivotement, de l'organe de déblocage 33 depuis la position de blocage vers la position de déblocage et une position de sécurité inactive (figure 8) dans laquelle l'organe de sécurité 49 relâche le déplacement, notamment le pivotement, de l'organe de déblocage 33 depuis la position de blocage vers la position de déblocage, lorsque la chape d'attelage 14 occupe la position rapprochée. L'organe de sécurité 49 peut aussi être conçu pour bloquer le déplacement, notamment le pivotement, de l'organe de déblocage 33 depuis la position de blocage vers la position de déblocage, lorsque l'organe de sécurité 49 pivote entre la position de sécurité inactive et la position de sécurité active.

Le bras de relevage principal 103 portant le point de relevage principal 102 est en outre destiné à entraîner en pivotement l'organe de sécurité 49 depuis la position de sécurité inactive vers la position de sécurité active, lorsque le pulvérisateur agricole 10 est attelé à l'engin agricole 100 et que le bras de relevage principal 103 pivote depuis la première position angulaire vers la deuxième position angulaire (figure 7).

De cette manière, le bras de relevage principal 103 portant le point de relevage principal 102 entraîne en pivotement l'organe de sécurité 49 vers la position de sécurité active, lorsque le bras de relevage principal 103 est lui-même entraîné en pivotement par l'axe d'attelage 16 vers la deuxième position angulaire (figure 7). L'organe de sécurité 49 pivote ainsi automatiquement vers la position de sécurité active, lorsque le système de relevage 101 lève le châssis 11 du pulvérisateur agricole 10 vers la position relevée et que le bras de relevage principal 103 est de ce fait entraîner en pivotement par l'axe d'attelage 16 vers la deuxième position angulaire.

L'organe de sécurité 49 comprend par exemple un doigt 50 (figures 7 et 8) contre lequel l'organe de déblocage 33 est conçu pour buter, lorsque la chape d'attelage 14 occupe la position rapprochée, que l'organe de sécurité 49 occupe la position de sécurité active et que l'organe de déblocage 33 se déplace, notamment pivote, depuis la position de blocage vers la position de déblocage. Le doigt 50 peut aussi être conçu pour buter contre l'organe de déblocage 33, lorsque l'organe de sécurité 49 pivote entre la position de sécurité inactive et la position de sécurité active.

Le doigt 50 de l'organe de sécurité 49 peut s'étendre entre une première extrémité par l'intermédiaire de laquelle le doigt 50 est monté pivotant sur la chape d'attelage 14 autour de l'axe d'attelage 16 et une deuxième extrémité 52 (figure 11) opposée qui est libre et par l'intermédiaire de laquelle l'organe de déblocage 33 butte contre le doigt 50. Le doigt 50 s'étend donc radialement depuis l'axe d'attelage 16.

L'organe de déblocage 33 peut comprendre un deuxième corps 53 pourvu d'une surface de butée 54 (figures 7 et 8) conçue pour buter contre le doigt 50 de l'organe de sécurité 49, notamment contre sa deuxième extrémité 52, lorsque la chape d'attelage 14 occupe la position rapprochée, que l'organe de sécurité 49 occupe la position de sécurité active et que l'organe de déblocage 33 se déplace, notamment pivote, depuis la position de blocage vers la position de déblocage. La surface de butée 54 peut en outre être conçue pour buter contre le doigt 50 de l'organe de sécurité 49, lorsque l'organe de sécurité 49 pivote entre la position de sécurité inactive et la position de sécurité active.

Pour cela, la surface de butée 54 de l'organe de déblocage 33 est orientée en regard de la deuxième extrémité 52 du doigt 50 de l'organe de sécurité 49, lorsque la chape d'attelage 14 occupe la position rapprochée, que l'organe de sécurité 49 occupe la position de sécurité active et le cas échéant pivote entre la position de sécurité inactive et la position de sécurité active. La surface de butée 54 peut aussi être globalement parallèle avec l'axe d'attelage 16.

Le deuxième corps 53 de l'organe de déblocage 33 est par exemple monté solidaire en pivotement du premier corps 39 de l'organe de déblocage 33. Pour cela, les premier et deuxième corps 39, 53 de l'organe de déblocage 33 peuvent être reliés l'un à l'autre par l'intermédiaire du premier et/ou du deuxième axes 42, 44 (figure 3).

L'organe de sécurité 49 comprend par exemple un axe de sécurité 55, sensiblement parallèle à l'axe d'attelage 16, par l'intermédiaire duquel le bras de relevage principal 103 portant le point de relevage principal 102 est destiné à entraîner en pivotement l'organe de sécurité 49 depuis la position de sécurité inactive vers la position de sécurité active, lorsque le pulvérisateur agricole 10 est attelé à l'engin agricole 100 et que le bras de relevage 103 pivote depuis la première position angulaire vers la deuxième position angulaire.

Pour cela, l'axe de sécurité 55 peut être situé en dessous du bras de relevage principal 103 portant le point de relevage principal 102, lorsque le pulvérisateur agricole 10 est attelé à l'engin agricole 100 et que le bras de relevage 103 occupe la première position angulaire. L'axe de sécurité 55 relie par exemple entre elles deux oreilles 56 (figure 11) de l'organe de sécurité 49 qui sont montées pivotantes par rapport à la chape d'attelage 14 autour de l'axe d'attelage 16. Le point de relevage principal 102 est par exemple destiné à être transversalement interposé entre les deux oreilles 56 de l'organe de sécurité 49 (figure 11), lorsqu'il est monté sur l'axe d'attelage 16. Les deux crochets 24 du premier verrou 20 peuvent en outre être transversalement interposés entre les deux oreilles 56 de l'organe de sécurité 49 (figure 11).

Le doigt 50 de l'organe de sécurité 49 est par exemple monté solidaire en pivotement sur l'une des deux oreilles 56. Pour cela, un orifice ou une fente est par exemple ménagé dans ladite oreille 56, tandis qu'un orifice recevant un assemblage boulonné 58 est ménagé en correspondance dans le doigt 50 (figure 11). La fente permet d'adapter l'orientation du doigt 50 par rapport à l'axe d'attelage 16 en fonction du point de relevage principal 102 de l'engin agricole 100 et du bras de relevage principal 103 le portant.

Un quatrième organe de rappel élastique 59 du dispositif de sécurité 49, 59 peut en outre être conçu pour rappeler élastiquement l'organe de sécurité 49 en pivotement vers la position de sécurité inactive (figures 1, 2 et 11).

De cette manière, le quatrième organe de rappel élastique 59 permet de maintenir l'axe de sécurité 55 en contact avec le bras de relevage principal 103, lorsque le point de relevage principal 102 qu'il porte est monté sur l'axe d'attelage 16, et ainsi de s'assurer que l'organe de sécurité 49 pivote depuis la position de sécurité inactive vers la position de sécurité active, lorsque le bras de relevage principal 103 pivote depuis la première position angulaire vers la deuxième position angulaire. Le quatrième organe de rappel élastique 59 permet aussi de s'assurer que l'organe de sécurité 49 pivote automatiquement depuis la position de sécurité active vers la position de sécurité inactive, lorsque le bras de relevage principal 103 pivote lui-même depuis la deuxième position angulaire vers la première position angulaire.

Le quatrième organe de rappel élastique 59 est par exemple formé d'un ressort de traction comprenant une première extrémité montée sur la chape d'attelage 14 et une deuxième extrémité opposée montée sur l'organe de sécurité 49, notamment sur l'une des oreilles 56 de l'organe de sécurité 49. D'autres types de ressort monté entre l'organe de sécurité 49 et la chape d'attelage 14 peuvent bien sûr être prévus. D'autres types d'organe de rappel élastique peuvent bien sûr aussi être prévus.

Le système d'attelage 12 peut aussi comprendre un organe de butée 62 conçu pour bloquer la chape d'attelage 14 en pivotement dans le premier sens de pivotement allant de la position rapprochée à la position écartée, lorsque la chape d'attelage 14 occupe la position écartée (figures 1 et 2). L'organe de butée 62 permet de limiter le pivotement de la chape d'attelage 14 dans le premier sens de pivotement et donc d'éviter que la chape d'attelage 14 pivote jusqu'à ce que l'axe d'attelage 16 atteigne le sol S, ce qui facilite la manipulation de la chape d'attelage 14 par l'agriculteur pour y monter le point de relevage principal 102. L'organe de butée 62 est par exemple formé d'une corde comprenant une première extrémité montée sur la chape d'attelage 14 et une deuxième extrémité opposée montée sur le châssis 11 du pulvérisateur agricole 10. La corde 62 peut être remplacée par un câble métallique, une élingue, une chaîne ou encore un système à deux bielles montées en série et pivotante l'une par rapport à l'autre sur une plage angulaire limitée à 180°.

Le système d'attelage 12 peut encore comprendre un support 65 monté solidaire sur le châssis 11 du pulvérisateur agricole 10 et par l'intermédiaire duquel le dispositif de verrouillage 20, 21, 23 et/ou le dispositif de déblocage 33, 36, 37 et/ou le troisième organe de rappel élastique 45 sont montés sur le châssis 11. Le support 65 peut être démontable du châssis 11. Pour cela, le montage du support 65 sur le châssis 11 est par exemple réalisé au moyen d'assemblages boulonnés.

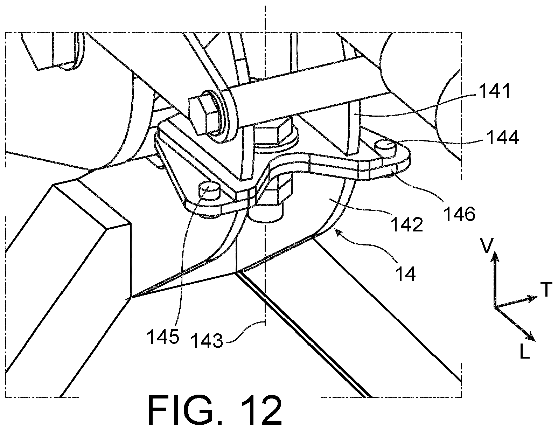

La chape d'attelage 14 comprend par exemple une première partie 141 portant l'axe d'attelage 16 et une deuxième partie 142 par l'intermédiaire de laquelle la chape d'attelage 14 est montée pivotante sur le châssis 11 du pulvérisateur agricole 10 (figure 12). La première partie 141 de la chape d'attelage 14 est montée pivotante sur la deuxième partie 142 autour d'un cinquième axe de pivotement 143, sensiblement perpendiculaire à l'axe d'attelage 16 et au premier axe de pivotement 17, entre une première position angulaire extrême et une deuxième position angulaire extrême, en passant par une position angulaire médiane (figure 12) dans laquelle l'axe d'attelage 16 est parallèle au premier axe de pivotement 17 ou au moins compris dans un même plan.

La première partie 141 de la chape d'attelage 14 pivote par exemple par rapport à la deuxième partie 142 d'un angle suffisant pour assurer le fonctionnement du système d'attelage 12, lorsque le pulvérisateur agricole 10 est attelé à l'engin agricole 100. Cet angle est par exemple inférieur ou égal à 10°, notamment inférieur ou égal à 5°, entre la position angulaire médiane et chacune des première et deuxième positions angulaires extrêmes. Cela permet de rattraper un défaut d'alignement entre le point de relevage principal 102, l'axe d'attelage 16 et le premier verrou 20, qui intervient par exemple lorsque l'attelage est réalisé sur sol accidenté.

Pour cela, la chape d'attelage 14 peut comprendre deux butées 144, 145 (figure 12) respectivement conçues pour bloquer le pivotement de la première partie 141 de la chape d'attelage 14 dans un sens de pivotement allant de la deuxième position angulaire extrême à la première position angulaire extrême, lorsque la première partie 141 occupe la première position angulaire extrême, et pour bloquer le pivotement de la première partie 141 de la chape d'attelage 14 dans un sens de pivotement allant de la première position angulaire extrême à la deuxième position angulaire extrême, lorsque la première partie 141 occupe la deuxième position angulaire extrême.

Les butées 144, 145 sont par exemple agencées de part et d'autre d'un plan (non représenté) globalement perpendiculaire au premier axe de pivotement 17 et dans lequel le cinquième axe de pivotement 143 est compris.

Les butées 144, 145 comprennent par exemple chacune une surface de butée contre laquelle la première partie 141 de la chape d'attelage 14 vient en butée à l'issue du pivotement de la première partie 141 vers la première ou la deuxième position angulaire extrême, respectivement.

Les butées 144, 145 peuvent être formées par des plots s'étendant globalement parallèlement au cinquième axe de pivotement 143 (figure 12).

Une plaque 146 portant les plots 144, 145 est par exemple montée solidaire sur la deuxième partie 142 de la chape d'attelage 14.

En variante (non représentée), l'organe d'actionnement 37 comprend un vérin monté d'une part sur l'organe de déblocage 33 et d'autre part sur le châssis 11 du pulvérisateur agricole 10, le vérin étant conçu pour entraîner l'organe de déblocage 33 en déplacement, notamment en pivotement, par rapport au châssis 11, entre la position de blocage et la position de déblocage. Le vérin est par exemple électrique, hydraulique ou encore pneumatique.

Une unité de commande électronique, par exemple portée par l'engin agricole 100, est en outre conçue pour commander le vérin d'entraîner l'organe de déblocage 33 en déplacement, notamment en pivotement, de la position de blocage à la position de déblocage. L'unité de commande peut piloter le vérin directement, notamment lorsque le vérin est entraîné électriquement, ou indirectement par l'intermédiaire d'un circuit hydraulique ou pneumatique qui est alors piloté par l'unité de commande et qui entraîne le vérin.

L'unité de commande est encore reliée à une interface utilisateur par l'intermédiaire de laquelle l'agriculteur communique avec l'unité de commande, notamment depuis la cabine conducteur de l'engin agricole 100, l'unité de commande étant conçue pour commander le vérin d'entraîner l'organe de déblocage 33 en déplacement, notamment en pivotement, de la position de blocage à la position de déblocage, lorsque l'unité de commande reçoit une commande envoyée par l'agriculteur via l'interface utilisateur. Le déblocage de la chape d'attelage 14 occupant la position rapprochée est donc manuel.

Le dispositif de sécurité 49, 59 comprend par exemple un organe de détection, relié à l'unité de commande et monté sur la deuxième extrémité 52 du doigt 50 de l'organe de sécurité 49. L'organe de détection est conçu pour envoyer un signal de détection à l'unité de commande, lorsqu'il détecte la surface de butée 54, la surface de butée 54 étant agencée en regard de la deuxième extrémité 52 du doigt 50, lorsque la chape d'attelage 14 occupe la position rapprochée, que l'organe de sécurité 49 occupe la position de sécurité active et le cas échéant pivote entre la position de sécurité inactive et la position de sécurité active. L'unité de commande est en outre conçue pour inhiber une commande envoyée par l'agriculteur via l'interface utilisateur pour déplacer, notamment pour pivoter, l'organe de déblocage 33 de la position de blocage à la position de déblocage, lorsque l'unité de commande reçoit un signal de détection de l'organe de détection. L'unité de commande ne transmet donc au vérin aucune commande d'entraînement en déplacement de l'organe de déblocage 33 de la position de blocage vers la position de déblocage, lorsque la deuxième extrémité 52 du doigt 50 est agencée en regard de la surface de butée 54. Le déblocage de la chape d'attelage 14 occupant la position rapprochée par l'organe de déblocage 33 est ainsi automatiquement empêché par le dispositif de sécurité 49, 59, lorsque le châssis 11 du pulvérisateur agricole 10 occupe la position relevée et, le cas échéant, lorsque le système de relevage 101 lève ou abaisse le châssis 11 entre les positions abaissée et relevée.

L'organe de détection est par exemple formé d'un capteur inductif, la surface de butée 54 étant alors métallique. En variante, l'organe de détection est formé d'un bouton poussoir conçu pour fermer un interrupteur porté par le doigt 50 et ainsi envoyer le signal de détection, lorsque la surface de butée 54 presse contre le bouton poussoir, qui glisse ou roule contre ladite surface de butée 54, et pour ouvrir l'interrupteur, lorsque la surface de butée 54 relâche le bouton poussoir. Encore en variante, l'organe de détection est formé d'un capteur optique. D'autres types d'organe de détection peuvent bien sûr être mis en oeuvre.

Le pulvérisateur agricole 10 décrit ci-dessus est particulièrement avantageux dans la mesure où il permet d'augmenter la distance maximale autorisée entre l'engin agricole 100 et le pulvérisateur agricole 10 pour monter le point de relevage principal 102 sur l'axe d'attelage 16, facilitant ainsi cette opération pour l'agriculteur.

## Revendications

1. Pulvérisateur agricole (10) destiné à être porté par un engin agricole (100) comprenant un système de relevage (101) pourvu d'un point de relevage principal (102), le pulvérisateur agricole (10) comprenant un système d'attelage (12) destiné à atteler le pulvérisateur agricole (10) à l'engin agricole (100) et un châssis (11) fixe sur lequel le système d'attelage (12) est monté, le système de relevage (101) de l'engin agricole (100) étant destiné à lever et à baisser le châssis (11) par rapport à l'engin agricole (100), entre une position abaissée dans laquelle le châssis (11) est posé sur un sol (S) globalement horizontal et une position relevée dans laquelle le châssis (11) est porté par l'engin agricole (100), lorsque le pulvérisateur agricole (10) est attelé à l'engin agricole (100), le système d'attelage (12) comprenant en outre :
- une chape d'attelage (14) comprenant un axe d'attelage (16) globalement horizontal, la chape d'attelage (14) étant en outre montée pivotante sur le châssis (11), autour d'un premier axe de pivotement (17) sensiblement parallèle à l'axe d'attelage (16), entre une position écartée et une position rapprochée dans laquelle l'axe d'attelage (16) est plus proche du châssis (11) qu'en position écartée, une distance (d) entre l'axe d'attelage (16) et le premier axe de pivotement (17) étant fixe, le point de relevage principal (102) étant destiné à être monté de manière réversible sur l'axe d'attelage (16) et à pivoter par rapport à la chape d'attelage (14) autour de l'axe d'attelage (16) et entraîner en pivotement la chape d'attelage (14) entre la position écartée et la position rapprochée, lorsque le point de relevage principal (102) est monté sur l'axe d'attelage (16),
- un dispositif de verrouillage (20, 21, 23) conçu pour verrouiller automatiquement le pivotement de la chape d'attelage (14) par rapport au châssis (11), dans un premier sens de pivotement allant de la position rapprochée à la position écartée, lorsque la chape d'attelage (14) atteint la position rapprochée, le pulvérisateur agricole (10) étant attelé à l'engin agricole (100), lorsque le point de relevage principal (102) est monté sur l'axe d'attelage (16), que la chape d'attelage (14) occupe la position rapprochée et que le dispositif de verrouillage (20, 21, 23) verrouille le pivotement de la chape d'attelage (14) dans le premier sens de pivotement ;
le pulvérisateur agricole (10) étant **caractérisé en ce que** l'axe d'attelage (16) est en outre situé au-dessus du premier axe de pivotement (17) de la chape d'attelage (14), lorsque la chape d'attelage (14) occupe la position rapprochée.

2. Pulvérisateur agricole (10) selon la revendication 1, dans lequel :
- le dispositif de verrouillage (20, 21, 23) comprend :
* un premier verrou (20) monté pivotant sur le châssis (11) autour d'un deuxième axe de pivotement (22) sensiblement parallèle à l'axe d'attelage (16),
l'axe d'attelage (16) étant conçu pour coopérer avec le premier verrou (20) et pour entraîner le premier verrou (20) en pivotement, entre une position de déverrouillage dans laquelle la chape d'attelage (14) est libre de pivoter vers la position rapprochée et vers la position écartée et une position de verrouillage dans laquelle le pivotement de la chape d'attelage (14) dans le premier sens de pivotement est verrouillé, lorsque la chape d'attelage (14) pivote entre la position écartée et la position rapprochée,
* un deuxième verrou (21) monté mobile sur le châssis (11), entre une position de repos et une position contrainte dans laquelle un premier organe de rappel élastique (23) rappelle le deuxième verrou (21) en déplacement vers la position de repos,
- le premier verrou (20) est conçu pour entraîner le deuxième verrou (21) en déplacement depuis la position de repos vers la position contrainte, lorsque le premier verrou (20) pivote depuis la position de déverrouillage vers la position de verrouillage, et pour relâcher le deuxième verrou (21), lorsque le premier verrou (20) atteint la position de verrouillage, et
- le deuxième verrou (21) est conçu pour venir en butée contre le premier verrou (20), lorsque le premier verrou (20) atteint la position de verrouillage et que le deuxième verrou (21) se déplace depuis la position contrainte vers la position de repos sous l'effet du premier organe de rappel élastique (23), de sorte à verrouiller automatiquement le pivotement du premier verrou (20), dans un sens de pivotement allant de la position de verrouillage vers la position de déverrouillage, lorsque la chape d'attelage (14) atteint la position rapprochée.

3. Pulvérisateur agricole (10) selon la revendication 1 ou la revendication 2, dans lequel le système d'attelage (12) comprend un dispositif de déblocage (33, 36, 37) conçu pour débloquer manuellement le pivotement de la chape d'attelage (14) par rapport au châssis (11), dans le premier sens de pivotement, lorsque la chape d'attelage (14) occupe la position rapprochée.

4. Pulvérisateur agricole (10) selon la revendication 2 et la revendication 3, dans lequel :
- le dispositif de déblocage (33, 36, 37) comprend un organe de déblocage (33) monté mobile sur le châssis (11), entre une position de blocage et une position de déblocage, l'organe de déblocage (33) étant conçu pour entraîner le deuxième verrou (21) en déplacement, depuis la position de repos vers la position contrainte, lorsque l'organe de déblocage (33) se déplace depuis la position de blocage vers la position de déblocage, et
- le deuxième verrou (21) est conçu pour maintenir le premier verrou (20) en position de verrouillage, lorsque le deuxième verrou (21) se déplace depuis la position de repos vers la position contrainte sous l'effet du déplacement de l'organe de déblocage (33) depuis la position de blocage vers la position de déblocage, et pour relâcher le premier verrou (20), lorsque le deuxième verrou (21) atteint la position contrainte.

5. Pulvérisateur agricole (10) selon la revendication 4, dans lequel le dispositif de déblocage (33, 36, 37) comprend un deuxième organe de rappel élastique (36) conçu pour rappeler élastiquement l'organe de déblocage (33) en déplacement vers la position de blocage.

6. Pulvérisateur agricole (10) selon la revendication 5, dans lequel :
- le deuxième verrou (21) est conçu pour entraîner l'organe de déblocage (33) en déplacement depuis la position de blocage vers la position de déblocage, lorsque le premier verrou (20) pivote depuis la position de déverrouillage vers la position de verrouillage et entraîne le deuxième verrou (21) en déplacement depuis la position de repos vers la position contrainte, et
- l'organe de déblocage (33) est conçu pour entraîner le deuxième verrou (21) en déplacement depuis la position contrainte vers la position de repos, lorsque le premier verrou (20) atteint la position de verrouillage et relâche le deuxième verrou (21) et que l'organe de déblocage (33) se déplace depuis la position de déblocage vers la position de blocage sous l'effet du deuxième organe de rappel élastique (36).

7. Pulvérisateur agricole (10) selon l'une des revendications 4 à 6, dans lequel le système d'attelage (12) comprend un troisième organe de rappel élastique (45) conçu pour rappeler élastiquement le premier verrou (20) en pivotement dans le sens de pivotement allant de la position de verrouillage à la position de déverrouillage.

8. Pulvérisateur agricole (10) selon l'une des revendications 3 à 7, dans lequel le système d'attelage (12) comprend un dispositif de sécurité (49, 59) conçu pour automatiquement empêcher le dispositif de déblocage (33, 36, 37) de débloquer le pivotement de la chape d'attelage (14), dans le premier sens de pivotement allant de la position rapprochée à la position écartée, lorsque le châssis (11) du pulvérisateur agricole (10) occupe la position relevée.

9. Pulvérisateur agricole (10) selon l'une des revendications 4 à 7 et la revendication 8, dans lequel :
- le dispositif de sécurité (49, 59) comprend un organe de sécurité (49) monté pivotant sur la chape d'attelage (14) autour de l'axe d'attelage (16), l'organe de sécurité (49) étant conçu pour pivoter entre une positon de sécurité active dans laquelle l'organe de sécurité (49) bloque le déplacement de l'organe de déblocage (33) depuis la position de blocage vers la position de déblocage et une position de sécurité inactive dans laquelle l'organe de sécurité (49) relâche le déplacement de l'organe de déblocage (33) depuis la position de blocage vers la position de déblocage, lorsque la chape d'attelage (14) occupe la position rapprochée,
- le point de relevage principal (102) est ménagé à l'extrémité libre d'un bras de relevage principal (103) monté pivotant sur une structure (105) de l'engin agricole (100) autour d'un axe de relevage principal (104), sensiblement parallèle à l'axe d'attelage (16) lorsque le point de relevage principal (102) est monté sur l'axe d'attelage (16),
- l'axe d'attelage (16) est destiné à entraîner le bras de relevage principal (103) en pivotement autour de l'axe de relevage principal (104), entre une première position angulaire et une deuxième position angulaire dans laquelle le point de relevage principal (102) est situé plus haut que dans la première position angulaire, lorsque le pulvérisateur agricole (10) est attelé à l'engin agricole (100) et que le système de relevage (101) lève et baisse le châssis (11) entre les positions abaissée et relevée, et
- le bras de relevage principal (103) est destiné à entraîner en pivotement l'organe de sécurité (49) depuis la position de sécurité inactive vers la position de sécurité active, lorsque le pulvérisateur agricole (10) est attelé à l'engin agricole (100) et que le bras de relevage principal (103) pivote depuis la première position angulaire vers la deuxième position angulaire.

10. Pulvérisateur agricole (10) selon la revendication 9, dans lequel l'organe de sécurité (49) comprend un axe de sécurité (55), sensiblement parallèle à l'axe d'attelage (16), par l'intermédiaire duquel le bras de relevage principal (103) est destiné à entraîner en pivotement l'organe de sécurité (49) depuis la position de sécurité inactive vers la position de sécurité active, lorsque le pulvérisateur agricole (10) est attelé à l'engin agricole (100) et que le bras de relevage (103) pivote depuis la première position angulaire vers la deuxième position angulaire.

11. Pulvérisateur agricole (10) selon la revendication 10, dans lequel l'axe de sécurité (55) est situé en dessous du bras de relevage principal (103), lorsque le pulvérisateur agricole (10) est attelé à l'engin agricole (100) et que le bras de relevage (103) occupe la première position angulaire.

12. Pulvérisateur agricole (10) selon la revendication 10 ou la revendication 11, dans lequel un quatrième organe de rappel élastique (59) du dispositif de sécurité (49, 59) est conçu pour rappeler élastiquement l'organe de sécurité (49) en pivotement vers la position de sécurité inactive.

13. Pulvérisateur agricole (10) selon l'une des revendications 8 à 12, dans lequel le dispositif de sécurité (49, 59) est aussi conçu pour automatiquement empêcher le dispositif de déblocage (33, 36, 37) de débloquer le pivotement de la chape d'attelage (14), dans le premier sens de pivotement allant de la position rapprochée à la position écartée, lorsque le pulvérisateur agricole (10) est attelé à l'engin agricole (100) et que le système de relevage (101) lève et abaisse le châssis (11) entre les positions abaissée et relevée.

14. Pulvérisateur agricole (10) selon l'une des revendications 1 à 13, dans lequel la chape d'attelage (14) comprend une première partie (141) portant l'axe d'attelage (16) et une deuxième partie (142) par l'intermédiaire de laquelle la chape d'attelage (14) est montée pivotante sur le châssis (11), et dans lequel la première partie (141) est montée pivotante sur la deuxième partie (142) autour d'un cinquième axe de pivotement (143), sensiblement perpendiculaire à l'axe d'attelage (16) et au premier axe de pivotement (17), entre une première position angulaire extrême et une deuxième position angulaire extrême, en passant par une position angulaire médiane dans laquelle l'axe d'attelage (16) est parallèle au premier axe de pivotement (17) ou au moins compris dans un même plan.

15. Pulvérisateur agricole (10) selon la revendication 14, dans lequel la chape d'attelage (14) comprend deux butées (144, 145) respectivement conçues pour bloquer le pivotement de la première partie (141) dans un sens de pivotement allant de la deuxième position angulaire extrême à la première position angulaire extrême, lorsque la première partie (141) occupe la première position angulaire extrême, et pour bloquer le pivotement de la première partie (141) dans un sens de pivotement allant de la première position angulaire extrême à la deuxième position angulaire extrême, lorsque la première partie (141) occupe la deuxième position angulaire extrême.

## Patentansprüche

1. Feldspritze (10), die bestimmt ist, von einer Landmaschine (100) getragen zu werden, umfassend ein Hebesystem (101), das mit einem Haupthebepunkt (102) versehen ist, wobei die Feldspritze (10) ein Kupplungssystem (12) umfasst, das bestimmt ist, die Feldspritze (10) an die Landmaschine (100) anzukoppeln, und einen festen Rahmen (11), an dem das Kupplungssystem (12) angebracht ist, wobei das Hebesystem (101) der Landmaschine (100) bestimmt ist, den Rahmen (11) in Bezug auf die Landmaschine (100) zwischen einer abgesenkten Position, in der der Rahmen (11) auf einem global horizontalen Boden (S) abgestellt ist, und einer angehobenen Position, in der der Rahmen (11) von der Landmaschine (100) getragen wird, anzuheben und abzusenken, wenn die Feldspritze (10) an die Landmaschine (100) angekoppelt ist, wobei das Kupplungssystem (12) ferner umfasst:
- ein Zugmaul (14), umfassend eine global horizontale Kupplungsachse (16), wobei das Zugmaul (14) ferner um eine erste Schwenkachse (17), die etwa parallel zur Kupplungsachse (16) verläuft, zwischen einer abgespreizten Position und einer angenäherten Position, in der die Kupplungsachse (16) näher am Rahmen (11) ist als in abgespreizter Position, schwenkbar am Rahmen (11) angebracht ist, wobei ein Abstand (d) zwischen der Kupplungsachse (16) und der ersten Schwenkachse (17) fest ist, wobei der Haupthebepunkt (102) bestimmt ist, reversibel an der Kupplungsachse (16) angebracht zu sein und in Bezug auf das Zugmaul (14) um die Kupplungsachse (16) zu schwenken und das Zugmaul (14) zwischen der abgespreizten Position und der angenäherten Position schwenkend anzutreiben, wenn der Haupthebepunkt (102) an der Kupplungsachse (16) angebracht ist,
- eine Verriegelungsvorrichtung (20, 21, 23), die konstruiert ist, um das Schwenken des Zugmauls (14) in Bezug auf den Rahmen (11) in einer ersten Schwenkrichtung aus der angenäherten Position in die abgespreizte Position automatisch zu verriegeln, wenn das Zugmaul (14), die angenäherte Position erreicht, wobei die Feldspritze (10) an die Landmaschine (100) angekoppelt ist, wenn der Haupthebepunkt (102) an der Kupplungsachse (16) angebracht ist, das Zugmaul (14) die angenäherte Position einnimmt und die Verriegelungsvorrichtung (20, 21, 23) das Schwenken des Zugmauls (14) in der ersten Schwenkrichtung verriegelt,
wobei die Feldspritze (10) **dadurch gekennzeichnet ist, dass** sich die Kupplungsachse (16) ferner oberhalb der ersten Schwenkachse (17) des Zugmauls (14) befindet, wenn das Zugmaul (14) die angenäherte Position einnimmt.

2. Feldspritze (10) nach Anspruch 1, wobei:
- die Verriegelungsvorrichtung (20, 21, 23) umfasst:
* einen ersten Riegel (20), der um eine zweite Schwenkachse (22), die etwa parallel zur Kupplungsachse (16) verläuft, schwenkbar am Rahmen (11) angebracht ist,
wobei die Kupplungsachse (16) konstruiert ist, um mit dem ersten Riegel (20) zusammenzuwirken und um den ersten Riegel (20) zwischen einer Entriegelungsposition, in der das Zugmaul (14) frei in die angenäherte Position und in die abgespreizte Position schwenken kann, und einer Verriegelungsposition, in der das Schwenken des Zugmauls (14) in die erste Schwenkrichtung verriegelt ist, schwenkend anzutreiben, wenn das Zugmaul (14) zwischen der abgespreizten Position und der angenäherten Position schwenkt,
* einen zweiten Riegel (21), der auf dem Rahmen (11) zwischen einer Ruhestellung und einer gespannten Stellung, in welcher ein erstes elastisches Rückstellorgan (23) den zweiten Riegel (21) bei der Bewegung in die Ruhestellung zurückstellt, beweglich angebracht ist,
- wobei der erste Riegel (20) konstruiert ist, um den zweiten Riegel (21) bei der Bewegung aus der Ruhestellung in die gespannte Stellung anzutreiben, wenn der erste Riegel (20) aus der Entriegelungsposition in die Verriegelungsposition schwenkt und um den zweiten Riegel (21) freizugeben, wenn der erste Riegel (20) die Verriegelungsposition erreicht, und
- wobei der zweite Riegel (21) konstruiert ist, um an den ersten Riegel (20) anzustoßen, wenn der erste Riegel (20) die Verriegelungsposition erreicht und sich der zweite Riegel (21) aus der gespannten Stellung in die Ruhestellung unter der Wirkung des ersten elastischen Rückstellorgans (23) bewegt, um das Schwenken des ersten Riegels (20) in einer Schwenkrichtung aus der Verriegelungsposition in die Entriegelungsposition automatisch zu verriegeln, wenn das Zugmaul (14) die angenäherte Position erreicht.

3. Feldspritze (10) nach Anspruch 1 oder Anspruch 2, wobei das Kupplungssystem (12) eine Freigabevorrichtung (33, 36, 37) umfasst, die konstruiert ist, um das Schwenken des Zugmauls (14) in Bezug auf den Rahmen (11) in der ersten Schwenkrichtung manuell freizugeben, wenn das Zugmaul (14) die angenäherte Position einnimmt.

4. Feldspritze (10) nach Anspruch 2 und Anspruch 3, wobei:
- die Freigabevorrichtung (33, 36, 37) eine Freigabeeinrichtung (33) umfasst, die auf dem Rahmen (11) zwischen einer Sperrposition und einer Freigabeposition beweglich angebracht ist, wobei die Freigabeeinrichtung (33) konstruiert ist, um den zweiten Riegel (21) bei der Bewegung aus der Ruhestellung in die gespannte Stellung anzutreiben, wenn sich die Freigabeeinrichtung (33) aus der Sperrposition in die Freigabeposition bewegt, und
- der zweite Riegel (21) konstruiert ist, um den ersten Riegel (20) in Verriegelungsposition zu halten, wenn sich der zweite Riegel (21) aus der Ruhestellung in die gespannte Stellung unter der Wirkung der Bewegung der Freigabeeinrichtung (33) aus der Sperrposition in die Freigabeposition bewegt und um den ersten Riegel (20) freizugeben, wenn der zweite Riegel (21) die gespannte Stellung erreicht.

5. Feldspritze (10) nach Anspruch 4, wobei die Freigabevorrichtung (33, 36, 37) ein zweites elastisches Rückstellorgan (36) umfasst, das konstruiert ist, um die Freigabeeinrichtung (33) bei der Bewegung in die Sperrposition elastisch zurückzustellen.

6. Feldspritze (10) nach Anspruch 5, wobei:
- der zweite Riegel (21) konstruiert ist, um die Freigabeeinrichtung (33) bei der Bewegung aus der Sperrposition in die Freigabeposition anzutreiben, wenn der erste Riegel (20) aus der Entriegelungsposition in die Verriegelungsposition schwenkt und den zweiten Riegel (21) bei der Bewegung aus der Ruhestellung in die gespannte Stellung antreibt, und
- die Freigabeeinrichtung (33) konstruiert ist, um den zweiten Riegel (21) bei der Bewegung aus der gespannten Stellung in die Ruhestellung anzutreiben, wenn der erste Riegel (20) die Verriegelungsposition erreicht und den zweiten Riegel (21) freigibt und sich die Freigabeeinrichtung (33) aus der Freigabeposition in die Sperrposition unter der Wirkung des zweiten elastischen Rückstellorgans (36) bewegt.

7. Feldspritze (10) nach einem der Ansprüche 4 bis 6, wobei das Kupplungssystem (12) ein drittes elastisches Rückstellorgan (45) umfasst, das konstruiert ist, um den ersten Riegel (20) beim Schwenken in der Schwenkrichtung aus der Verriegelungsposition in die Entriegelungsposition elastisch zurückzustellen.

8. Feldspritze (10) nach einem der Ansprüche 3 bis 7, wobei das Kupplungssystem (12) eine Sicherheitsvorrichtung (49, 59) umfasst, die konstruiert ist, um automatisch zu verhindern, dass die Freigabevorrichtung (33, 36, 37) das Schwenken des Zugmauls (14) in der ersten Schwenkrichtung aus der angenäherten Position in die abgespreizte Position freigibt, wenn der Rahmen (11) der Feldspritze (10) die angehobene Position einnimmt.

9. Feldspritze (10) nach einem der Ansprüche 4 bis 7 und Anspruch 8, wobei:
- die Sicherheitsvorrichtung (49, 59) eine Sicherheitseinrichtung (49) umfasst, die auf dem Zugmaul (14) um die Kupplungsachse (16) schwenkend angebracht ist, wobei die Sicherheitseinrichtung (49) konstruiert ist, um zwischen einer aktiven Sicherheitsposition, in der die Sicherheitseinrichtung (49) die Bewegung der Freigabeeinrichtung (33) aus der Sperrposition in die Freigabeposition blockiert, und einer inaktiven Sicherheitsposition, in der die Sicherheitseinrichtung (49) die Bewegung der Freigabeeinrichtung (33) aus der Sperrposition in die Freigabeposition freigibt, zu schwenken, wenn das Zugmaul (14) die angenäherte Position einnimmt,
- der Haupthebepunkt (102) am freien Ende eines Haupthebearms (103) eingerichtet ist, der auf einer Struktur (105) der Landmaschine (100) um eine Haupthebeachse (104) schwenkend angebracht ist, die etwa parallel zur Kupplungsachse (16) ist, wenn der Haupthebepunkt (102) an der Kupplungsachse (16) angebracht ist,
- die Kupplungsachse (16) bestimmt ist, den Haupthebearm (103) schwenkend um die Haupthebeachse (104) zwischen einer ersten Winkelposition und einer zweiten Winkelposition anzutreiben, in der sich der Haupthebepunkt (102) höher als in der ersten Winkelposition befindet, wenn die Feldspritze (10) an die Landmaschine (100) angekoppelt ist und das Hebesystem (101) den Rahmen (11) zwischen der abgesenkten und angehobenen Position hebt und senkt, und
- der Haupthebearm (103) bestimmt ist, die Sicherheitseinrichtung (49) aus der inaktiven Sicherheitsposition in die aktive Sicherheitsposition schwenkend anzutreiben, wenn die Feldspritze (10) an die Landmaschine (100) angekoppelt ist und der Haupthebearm (103) aus der ersten Winkelposition in die zweite Winkelposition schwenkt.

10. Feldspritze (10) nach Anspruch 9, wobei die Sicherheitseinrichtung (49) eine Sicherheitsachse (55) umfasst, die etwa parallel zur Kupplungsachse (16) ist, über die der Haupthebearm (103) bestimmt ist, die Sicherheitseinrichtung (49) aus der inaktiven Sicherheitsposition in die aktive Sicherheitsposition schwenkend anzutreiben, wenn die Feldspritze (10) an die Landmaschine (100) angekoppelt ist und der Haupthebearm (103) aus der ersten Winkelposition in die zweite Winkelposition schwenkt.

11. Feldspritze (10) nach Anspruch 10, wobei sich die Sicherheitsachse (55) unterhalb des Haupthebearms (103) befindet, wenn die Feldspritze (10) an die Landmaschine (100) angekoppelt ist und der Hebearm (103) die erste Winkelposition einnimmt.

12. Feldspritze (10) nach Anspruch 10 oder Anspruch 11, wobei ein viertes elastisches Rückstellorgan (59) der Sicherheitsvorrichtung (49, 59) konstruiert ist, um die Sicherheitseinrichtung (49) beim Schwenken in die inaktive Sicherheitsposition elastisch zurückzustellen.

13. Feldspritze (10) nach einem der Ansprüche 8 bis 12, wobei die Sicherheitsvorrichtung (49, 59) ebenfalls konstruiert ist, um die Freigabevorrichtung (33, 36, 37) automatisch daran zu hindern, das Schwenken des Zugmauls (14) in der ersten Schwenkrichtung aus der angenäherten Position in die abgespreizte Position freizugeben, wenn die Feldspritze (10) an die Landmaschine (100) angekoppelt ist und das Hebesystem (101) den Rahmen (11) zwischen der abgesenkten und angehobenen Position hebt und senkt.

14. Feldspritze (10) nach einem der Ansprüche 1 bis 13, wobei das Zugmaul (14) einen ersten Teil (141) umfasst, der die Kupplungsachse (16) trägt, und einen zweiten Teil (142), über den das Zugmaul (14) auf dem Rahmen (11) schwenkend angebracht ist, und wobei der erste Teil (141) auf dem zweite Teil (142) um eine fünfte Schwenkachse (143) schwenkend angebracht ist, die etwa senkrecht zur Kupplungsachse (16) und zur ersten Schwenkachse (17) ist, zwischen einer ersten extremen Winkelposition und einer zweiten extremen Winkelposition über eine mittlere Winkelposition, in der die Kupplungsachse (16) parallel zur ersten Schwenkachse (17) ist oder mindestens in einer gleichen Ebene liegt.

15. Feldspritze (10) nach Anspruch 14, wobei das Zugmaul (14) zwei Anschläge (144, 145) umfasst, die jeweils konstruiert sind, um das Schwenken des ersten Teils (141) in einer Schwenkrichtung aus der zweiten extremen Winkelposition in die erste extreme Winkelposition zu blockieren, wenn der erste Teil (141) die erste extreme Winkelposition einnimmt, und um das Schwenken des ersten Teils (141) in einer Schwenkrichtung aus der ersten extremen Winkelposition in die zweite extreme Winkelposition zu blockieren, wenn der erste Teil (141) die zweite extreme Winkelposition einnimmt.

## Claims

1. An agricultural sprayer (10) for being carried by an agricultural machine (100) comprising a lifting system (101) provided with a main lifting point (102), the agricultural sprayer (10) comprising a hitch system (12) for hitching the agricultural sprayer (10) to the agricultural machine (100) and a fixed chassis (11) to which the hitch system (12) is mounted, the lifting system (101) of the agricultural machine (100) being for raising and lowering the chassis (11) relative to the agricultural machine (100), between a lowered position in which the chassis (11) is put on an overall horizontal ground (S), and a raised position in which the chassis (11) is carried by the agricultural machine (100), when the agricultural sprayer (10) is hitched to the agricultural machine (100), the hitch system (12) further comprising:
- a hitch yoke (14) comprising an overall horizontal hitch axis (16), the hitch yoke (14) being further pivotably mounted to the chassis (11), about a first pivot axis (17) substantially parallel to the hitch axis (16), between a distant position and a close position in which the hitch axis (16) is closer to the chassis (11) than in the distant position, a distance (d) between the hitch axis (16) and the first pivot axis (17) being fixed, the main lifting point (102) being arranged to be reversibly mounted to the hitch axis (16) and to pivot relative to the hitch yoke (14) about the hitch axis (16) and cause the hitch yoke (14) to pivot between the distant position and the close position, when the main lifting point (102) is mounted to the hitch axis (16),
- a locking device (20, 21, 23) designed to automatically lock pivoting of the hitch yoke (14) relative to the chassis (11), in a first pivot direction from the close position to the distant position, when the hitch yoke (14), pivoting from the distant position to the close position, reaches the close position, the agricultural sprayer (10) being hitched to the agricultural machine (100), when the main lifting point (102) is mounted to the hitch axis (16), the hitch yoke (14) occupies the close position and the locking device (20, 21, 23) locks pivoting of the hitch yoke (14) in the first pivot direction,
the agricultural sprayer (10) being **characterised in that** the hitch axis (16) is further located above the first pivot axis (17) of the hitch yoke (14), when the hitch yoke (14) occupies the close position.

2. The agricultural sprayer (10) according to claim 1, wherein:
- the locking device (20, 21, 23) comprises:
∘ a first lock (20) pivotably mounted to the chassis (11) about a second pivot axis (22) substantially parallel to the hitch axis (16),
the hitch axis (16) being designed to cooperate with the first lock (20) and to cause the first lock (20) to pivot, between an unlocking position in which the hitch yoke (14) is free to pivot to the close position and to the distant position, and a locking position in which pivoting of the hitch yoke (14) in the first pivot direction is locked, when the hitch yoke (14) pivots between the distant position and the close position,
∘ a second lock (21) movably mounted to the chassis (11), between a rest position and a restraint position in which a first elastic return means (23) returns the second lock (21) to move towards the rest position,
- the first lock (20) is designed to cause the second lock (21) to move from the rest position to the restraint position, when the first lock (20) pivots from the unlocking position to the locking position, and to release the second lock (21), when the first lock (20) reaches the locking position, and
- the second lock (21) is designed to abut against the first lock (20), when the first lock (20) reaches the locking position and the second lock (21) moves from the restraint position to the rest position under the effect of the first elastic return means (23) so as to automatically lock pivoting of the first lock (20), in a pivot direction from the locking position to the unlocking position, when the hitch yoke (14) reaches the close position.

3. The agricultural sprayer (10) according to claim 1 or claim 2, wherein the hitch system (12) comprises a deblocking device (33, 36, 37) designed to manually deblock pivoting of the hitch yoke (14) relative to the chassis (11), in the first pivot direction, when the hitch yoke (14) occupies the close position.

4. The agricultural sprayer (10) according to claim 2 and claim 3, wherein:
- the deblocking device (33, 36, 37) comprises a deblocking member (33) movably mounted to the chassis (11) between a blocking position and a deblocking position, the deblocking member (33) being designed to cause the second lock (21) to move from the rest position to the restraint position, when the deblocking member (33) moves from the blocking position to the deblocking position, and
- the second lock (21) is designed to hold the first lock (20) in the locking position, when the second lock (21) moves from the rest position to the restraint position under the effect of the movement of the deblocking member (33) from the blocking position to the deblocking position, and to release the first lock (20), when the second lock (21) reaches the restraint position.

5. The agricultural sprayer (10) according to claim 4, wherein the deblocking device (33, 36, 37) comprises a second elastic return means (36) designed to elastically return the deblocking member (33) to the blocking position.

6. The agricultural sprayer (10) according to claim 5, wherein:
- the second lock (21) is designed to cause the deblocking member (33) to move from the blocking position to the deblocking position, when the first lock (20) pivots from the unlocking position to the locking position and causes the second lock (21) to move from the rest position to the restraint position, and
- the deblocking member (33) is designed to cause the second lock (21) to move from the restraint position to the rest position, when the first lock (20) reaches the locking position and releases the second lock (21) and the deblocking member (33) moves from the deblocking position to the blocking position under the effect of the second elastic return means (36).

7. The agricultural sprayer (10) according to any of claims 4 to 6, wherein the hitch system (12) comprises a third elastic return means (45) designed to elastically pivotably return the first lock (20) in the pivot direction from the locking position to the unlocking position.

8. The agricultural sprayer (10) according to any of claims 3 to 7, wherein the hitch system (12) comprises a safety device (49, 59) designed to automatically prevent the deblocking device (33, 36, 37) from deblocking pivoting of the hitch yoke (14), in the first pivot direction from the close position to the distant position, when the chassis (11) of the agricultural sprayer (10) occupies the raised position.

9. The agricultural sprayer (10) according to any of claims 4 to 7 and claim 8, wherein:
- the safety device (49, 59) comprises a safety member (49) pivotably mounted to the hitch yoke (14) about the hitch axis (16), the safety member (49) being designed to pivot between an active safety position in which the safety member (49) blocks movement of the deblocking member (33) from the blocking position to the deblocking position and an inactive safety position in which the safety member (49) releases movement of the deblocking member (33) from the blocking position to the deblocking position, when the hitch yoke (14) occupies the close position,
- the main lifting point (102) is provided at the free end of a main lifting arm (103) pivotably mounted to a structure (105) of the agricultural machine (100) about a main lifting axis (104), substantially parallel to the hitch axis (16) when the main lifting point (102) is mounted to the hitch axis (16),
- the hitch axis (16) is for causing the main lifting arm (103) to pivot about the main lifting axis (104) between a first angular position and a second angular position, in which the main lifting point (102) is located higher than in the first angular position, when the agricultural sprayer (10) is hitched to the agricultural machine (100) and the lifting system (101) raises and lowers the chassis (11) between the lowered and raised positions, and
- the main lifting arm (103) is for causing the safety member (49) to pivot from the inactive safety position to the active safety position, when the agricultural sprayer (10) is hitched to the agricultural machine (100) and the main lifting arm (103) pivots from the first angular position to the second angular position.

10. The agricultural sprayer (10) according to claim 9, in which the safety member (49) comprises a safety axis (55), substantially parallel to the hitch axis (16), through which the main lifting arm (103) is for causing the safety member (49) to pivot from the inactive safety position to the active safety position, when the agricultural sprayer (10) is hitched to the agricultural machine (100) and the lifting arm (103) pivots from the first angular position to the second angular position.

11. The agricultural sprayer (10) according to claim 10, wherein the safety axis (55) is located below the main lifting arm (103), when the agricultural sprayer (10) is hitched to the agricultural machine (100) and the lifting arm (103) occupies the first angular position.

12. The agricultural sprayer (10) according to claim 10 or claim 11, wherein a fourth elastic return means (59) of the safety device (49, 59) is designed to elastically return the safety member (49) to pivot to the inactive safety position.

13. The agricultural sprayer (10) according to any of claims 8 to 12, wherein the safety device (49, 59) is also designed to automatically prevent the deblocking device (33, 36, 37) from deblocking pivoting of the hitch yoke (14), in the first pivot direction from the close position to the distant position, when the agricultural sprayer (10) is hitched to the agricultural machine (100) and the lifting system (101) raises and lowers the chassis (11) between the lowered and raised positions.

14. The agricultural sprayer (10) according to any of claims 1 to 13, wherein the hitch yoke (14) comprises a first part (141) carrying the hitch axis (16) and a second part (142) through which the hitch yoke (14) is pivotably mounted to the chassis (11), and wherein the first part (141) is pivotably mounted to the second part (142) about a fifth pivot axis (143), substantially perpendicular to the hitch axis (16) and to the first pivot axis (17), between a first end angular position and a second end angular position, by passing through a median angular position in which the hitch axis (16) is parallel to the first pivot axis (17) or at least included in the same plane.

15. The agricultural sprayer (10) according to claim 14, wherein the hitch yoke (14) comprises two stops (144, 145) respectively designed to block pivoting of the first part (141) in a pivot direction from the second end angular position to the first end angular position, when the first part (141) occupies the first end angular position, and for blocking pivoting of the first part (141) in a pivot direction from the first end angular position to the second end angular position, when the first part (141) occupies the second end angular position.
